# EUROPEAN PATENT SPECIFICATION

(11) **EP 4 592 866 B1**
(45) Date of publication and mention of the grant of the patent: **11.03.2026**
(21) Application number: 23879109.9
(22) Date of filing: 17.10.2023
(51) Int. Cl.: G06F 16/33, G06F 40/126, G06F 40/30, G06V 30/41, G06V 30/148, G06V 30/19, G06N 3/0464, G06N 3/048, G06N 3/084, G06F 18/25, G06V 10/80, G06V 10/82, G06V 20/70

(54) **DATA PROCESSING METHOD AND APPARATUS**
DATENVERARBEITUNGSVERFAHREN UND -VORRICHTUNG
PROCÉDÉ ET APPAREIL DE TRAITEMENT DE DONNÉES

(30) Priority: 20.10.2022 CN 202211292146
(43) Date of publication of application: 30.07.2025
(73) Proprietor: Huawei Technologies Co., Ltd., Shenzhen, Guangdong 518129 (CN)
(72) Inventor: ZHU, Yi, Shenzhen, Guangdong 518129 (CN); LIU, Jianzhuang, Shenzhen, Guangdong 518129 (CN)
(74) Representative: Gill Jennings & Every LLP
(86) International application number: PCT/CN2023/124977
(87) International publication number: WO 2024/083121

(56) References cited:
- CN-A- 108 776 787
- CN-A- 113 065 576
- CN-A- 113 505 193
- CN-A- 115 115 913
- CN-A- 115 757 692
- US-A1- 2022 147 715
- QU MENGXUE ET AL: "Computer Vision - ECCV 2022", vol. 13695, 27 July 2022 (2022-07-27), pages 546 - 562, XP093297099, ISSN: 0302-9743, ISBN: 978-3-031-19832-8, Retrieved from the Internet <URL:https://arxiv.org/pdf/2207.13325> DOI: 10.1007/978-3-031-19833-5_32
- CARION NICOLAS ET AL: "Computer Vision - ECCV 2020 : 16th European Conference, Glasgow, UK, August 23-28, 2020, Proceedings, Part I", 28 May 2020 (2020-05-28), Cham, XP093262007, ISSN: 0302-9743, ISBN: 978-3-030-58452-8, Retrieved from the Internet <URL:https://arxiv.org/pdf/2005.12872> DOI: 10.1007/978-3-030-58452-8_13
- HAOTIAN ZHANG ET AL: "GLIPv2: Unifying Localization and Vision-Language Understanding", ARXIV.ORG, CORNELL UNIVERSITY LIBRARY, 201 OLIN LIBRARY CORNELL UNIVERSITY ITHACA, NY 14853, 11 October 2022 (2022-10-11), XP091340472
- YANG LIU ET AL: "A Survey of Visual Transformers", ARXIV.ORG, CORNELL UNIVERSITY LIBRARY, 201 OLIN LIBRARY CORNELL UNIVERSITY ITHACA, NY 14853, 11 November 2021 (2021-11-11), XP091095728

## Description

### TECHNICAL FIELD

This application relates to the field of artificial intelligence, and in particular, to a data processing method and apparatus.

### BACKGROUND

Artificial intelligence (Artificial Intelligence, AI) is a theory, a method, a technology, and an application system that simulate and extend human intelligence by using a digital computer or a machine controlled by a digital computer, to perceive an environment, obtain knowledge, and use the knowledge to obtain an optimal result. In other words, the artificial intelligence is a branch of computer science and is intended to understand essence of intelligence and produce a new intelligent machine that can react in a manner similar to human intelligence. The artificial intelligence is to research design principles and implementation methods of various intelligent machines, so that the machines have perception, inference, and decision-making functions.

Language-driven precise instance segmentation is a special semantic segmentation technology, and is to accurately segment, according to a natural language instruction, an instance target described by a language in a picture. Characteristics of language-driven precise instance segmentation are as follows: (1) A conventional semantic segmentation model predicts a same label for all targets of a same category, and does not distinguish between different targets of a same category. However, language-driven precise instance segmentation needs to accurately recognize an instance target corresponding to a language description from a plurality of targets of a same category. (2) A semantic segmentation model needs to predefine labels of a group of semantic categories, to learn to segment targets of these categories. However, language-driven precise instance segmentation may receive more flexible natural language inputs, and does not limit the target categories.

Due to flexibility of the natural language input, a language-driven instance segmentation method mainly relies on fusion of natural language sentence encoding and visual encoding of an image, to activate a region highly correlated with language encoding in a visual feature map. However, a cross-modal feature fusion solution mainly has two challenges: One is that an instance target is not accurately located, and a single instance target cannot be accurately locked in a plurality of congested targets of a same category. The other one is that a predicted mask is not accurate enough, and is easy to be overflowed to adjacent targets of a same category. The foregoing problem also exists in a target detection task. Relevant prior art is cited below: "SiRi: A Simple Selective Retraining Mechanism for Transformer-based Visual Grounding", Mengxue Qu, et, al. Computer Vision - ECCV 2022, Springer Nature Switzerlandvol. 13695 27 July 2022 (2022-07-27), pages 546-562, XP093297099,ISSN: 0302-9743, DOI: 10.1007/978-3-031-19833-5_32ISBN: 978-3-031-19832-8, https://arxiv.org/pdf/2207.13325.

### SUMMARY

This application provides a data processing method, so that a problem of inaccurate target positioning and mask prediction or detection box prediction in an existing language-driven precise instance segmentation method can be effectively resolved. This improves processing precision of a model.

According to a first aspect, this application provides a data processing method, including: obtaining a first image feature corresponding to an image and a text feature corresponding to a text, where semantics of the text corresponds to a target object, and the text indicates to predict, from the image, a region corresponding to the target object; obtaining a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature; and determining, based on a similarity between the text feature and the plurality of second embedding vectors, a weight corresponding to each second embedding vector, where a plurality of weights are used to be fused (for example, weight) with a plurality of second image features, to determine a prediction region corresponding to the target object.

The image may include a plurality of objects including the target object, each second embedding vector corresponds to one object in the image, and one or more embedding vectors in the plurality of second embedding vectors may correspond to the target object. It should be understood that "correspond" herein may be understood as that the second embedding vector is used to describe a feature of the object in the image, and the second embedding vectors obtained through the neural network may distinguish between different objects in the image, so that an object granularity can be used in a subsequent prediction process.

This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve processing precision of a model.

In a possible implementation, the prediction region is a mask region or a detection box.

In a possible implementation, that semantics of the text corresponds to a target object specifically includes: The semantics of the text is used to describe a feature of the target object.

In a possible implementation, the obtaining a first image feature corresponding to an image and a text feature corresponding to a text includes:
processing the image by using an image encoder, to obtain a third image feature corresponding to the image;
processing the text by using a text encoder, to obtain a first text feature corresponding to the text; and
fusing the third image feature and the first text feature by using a bidirectional attention mechanism, to obtain the first image feature corresponding to the image and the text feature corresponding to the text.

In a possible implementation, the first image feature is a feature that is obtained through upsampling and whose size is consistent with that of the image.

In a possible implementation, the neural network includes a plurality of transformer layers.

According to a second aspect, a data processing method includes:
obtaining a first image feature corresponding to an image and a text feature corresponding to a text, where semantics of the text corresponds to a target object, and the text indicates to predict, from the image, a region corresponding to the target object; and the first image feature and the text feature are obtained through a feature extraction network;
obtaining a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature;
determining, based on a similarity between the text feature and the plurality of second embedding vectors, a weight corresponding to each second embedding vector, where a plurality of weights are used to be fused with a plurality of second image features, to determine a prediction region corresponding to the target object; and
updating the feature extraction network and the neural network based on a difference between the prediction region and a true region corresponding to the target object in the image.

The image may include a plurality of objects including the target object, each second embedding vector corresponds to one object in the image, and one or more embedding vectors in the plurality of second embedding vectors may correspond to the target object. It should be understood that "correspond" herein may be understood as that the second embedding vector is used to describe a feature of the object in the image, and the second embedding vectors obtained through the neural network may distinguish between different objects in the image, so that an object granularity can be used in a subsequent prediction process.

This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve processing precision of a model.

In a possible implementation, the prediction region is a mask region or a detection box.

In a possible implementation, that semantics of the text corresponds to a target object specifically includes: The semantics of the text is used to describe a feature of the target object.

In a possible implementation, the obtaining a first image feature corresponding to an image and a text feature corresponding to a text includes:
processing the image by using an image encoder, to obtain a third image feature corresponding to the image;
processing the text by using a text encoder, to obtain a first text feature corresponding to the text; and
fusing the third image feature and the first text feature by using a bidirectional attention mechanism, to obtain the first image feature corresponding to the image and the text feature corresponding to the text.

According to a third aspect, this application provides a data processing apparatus, including:
a processing module, configured to: obtain a first image feature corresponding to an image and a text feature corresponding to a text, where semantics of the text corresponds to a target object, and the text indicates to predict, from the image, a region corresponding to the target object;
obtain a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature; and
determine, based on a similarity between the text feature and the plurality of second embedding vectors, a weight corresponding to each second embedding vector, where a plurality of weights are used to be fused with a plurality of second image features, to determine a prediction region corresponding to the target object.

The image may include a plurality of objects including the target object, each second embedding vector corresponds to one object in the image, and one or more embedding vectors in the plurality of second embedding vectors may correspond to the target object. It should be understood that "correspond" herein may be understood as that the second embedding vector is used to describe a feature of the object in the image, and the second embedding vectors obtained through the neural network may distinguish between different objects in the image, so that an object granularity can be used in a subsequent prediction process.

This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve processing precision of a model.

In a possible implementation, the prediction region is a mask region or a detection box.

In a possible implementation, that semantics of the text corresponds to a target object specifically includes: The semantics of the text is used to describe a feature of the target object.

In a possible implementation, the processing module is specifically configured to:
process the image by using an image encoder, to obtain a third image feature corresponding to the image;
process the text by using a text encoder, to obtain a first text feature corresponding to the text; and
fuse the third image feature and the first text feature by using a bidirectional attention mechanism, to obtain the first image feature corresponding to the image and the text feature corresponding to the text.

In a possible implementation, the first image feature is a feature that is obtained through upsampling and whose size is consistent with that of the image.

In a possible implementation, the neural network includes a plurality of transformer layers.

According to a fourth aspect, this application provides a data processing apparatus, including:
a processing module, configured to: obtain a first image feature corresponding to an image and a text feature corresponding to a text, where semantics of the text corresponds to a target object, and the text indicates to predict, from the image, a region corresponding to the target object; and the first image feature and the text feature are obtained through a feature extraction network;
obtain a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature; and
determine, based on a similarity between the text feature and the plurality of second embedding vectors, a weight corresponding to each second embedding vector, where a plurality of weights are used to be fused with a plurality of second image features, to determine a prediction region corresponding to the target object; and
an update module, configured to update the feature extraction network and the neural network based on a difference between the prediction region and a true region corresponding to the target object in the image.

In a possible implementation, the prediction region is a mask region or a detection box.

In a possible implementation, that semantics of the text corresponds to a target object specifically includes: The semantics of the text is used to describe a feature of the target object.

In a possible implementation, the processing module is specifically configured to:
process the image by using an image encoder, to obtain a third image feature corresponding to the image;
process the text by using a text encoder, to obtain a first text feature corresponding to the text; and
fuse the third image feature and the first text feature by using a bidirectional attention mechanism, to obtain the first image feature corresponding to the image and the text feature corresponding to the text.

According to a fifth aspect, an embodiment of this application provides a data processing apparatus. The data processing apparatus may include a memory, a processor, and a bus system. The memory is configured to store a program. The processor is configured to execute the program in the memory, to perform the method according to any one of the first aspect and the optional implementations of the first aspect, and the method according to any one of the second aspect and the optional implementations of the second aspect.

According to a sixth aspect, an embodiment of this application provides a computer-readable storage medium. The computer-readable storage medium stores a computer program. When the computer program is run on a computer, the computer is enabled to perform the method according to any one of the first aspect and the optional implementations of the first aspect, and the method according to any one of the second aspect and the optional implementations of the second aspect.

According to a seventh aspect, an embodiment of this application provides a computer program. When the computer program is run on a computer, the computer is enabled to perform the method according to any one of the first aspect and the optional implementations of the first aspect, and the method according to any one of the second aspect and the optional implementations of the second aspect.

According to an eighth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete device.

### BRIEF DESCRIPTION OF DRAWINGS

FIG. 1A is a diagram of a structure of a main artificial intelligence framework;
FIG. 1B and FIG. 1C each are a diagram of an application system framework according to this application;
FIG. 1D is a diagram of an optional hardware structure of a terminal;
FIG. 2 is a diagram of a structure of a server;
FIG. 3 is a diagram of a system architecture according to this application;
FIG. 4 shows a cloud service procedure;
FIG. 5 is a diagram of a structure of a network;
FIG. 6 is a schematic flowchart of a data processing method according to an embodiment of this application;
FIG. 7 to FIG. 10 each are a schematic flowchart of a data processing method according to an embodiment of this application;
FIG. 11A and FIG. 11B each are a diagram of beneficial effects according to this application;
FIG. 12 is a diagram of a structure of a data processing apparatus according to an embodiment of this application;
FIG. 13 is a diagram of a structure of an execution device according to an embodiment of this application;
FIG. 14 is a diagram of a structure of a training device according to an embodiment of this application; and
FIG. 15 is a diagram of a structure of a chip according to an embodiment of this application.

### DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In this specification, claims, and the accompanying drawings of this application, the terms "first", "second", and the like are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, the terms "include", "have", and any other variants mean to cover the non-exclusive inclusion, so that a process, method, system, product, or device that includes a series of units is not necessarily limited to those units, but may include other units not expressly listed or inherent to such a process, method, system, product, or device.

Terms "substantially (substantially)", "about (about)", and similar terms are used in this specification as approximate terms rather than as degree terms, and are intended to take into account inherent deviations of measured values or calculated values that are known to those of ordinary skill in the art. In addition, when embodiments of this application are described, "may (may)" is used to mean "one or more possible embodiments". Terms "use (use)", "using (using)", and "used (used)" that are used in this specification may be considered to be synonymous with terms "utilize (utilize)", "utilizing (utilizing)", and "utilized (utilized)", respectively. In addition, the term "exemplary (exemplary)" is intended to refer to an instance or an example.

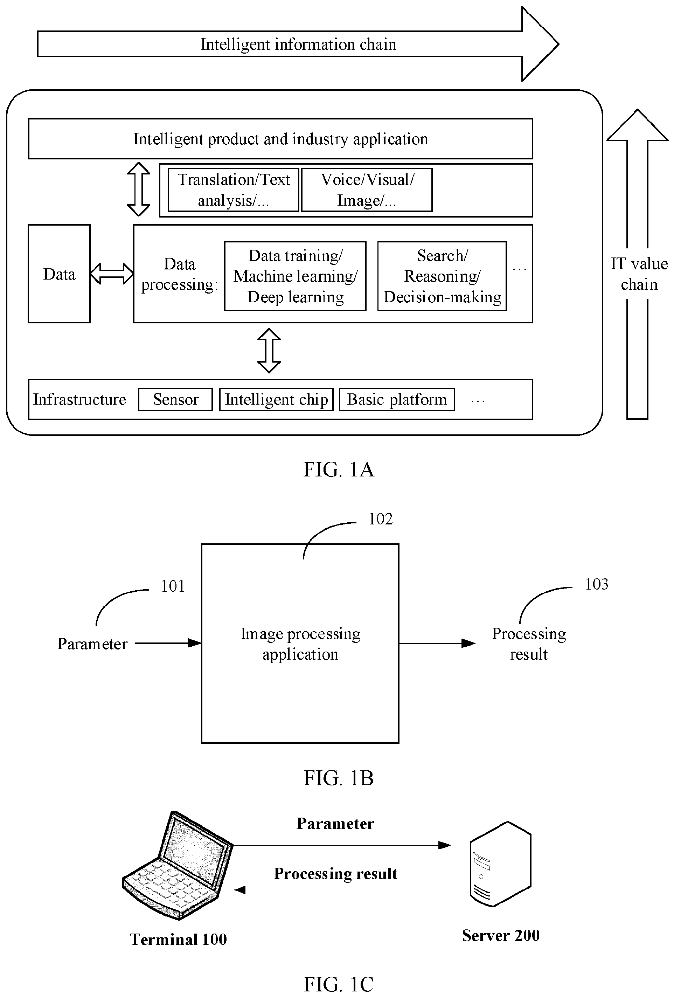

First, an overall working process of an artificial intelligence system is described. FIG. 1A is a diagram of a structure of a main artificial intelligence framework. The following describes the main artificial intelligence framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

### (3) Data processing

Data processing usually includes data training, machine learning, deep learning, search, inference, decision-making, and the like.

Machine learning and deep learning may mean performing symbolic and formal intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. Typical functions are search and matching.

Decision-making is a process of making a decision after intelligent information is inferred, and usually provides functions such as classification, ranking, and prediction.

### (4) General capability

After the data processing mentioned above is performed on the data, some general capabilities may be further formed based on a data processing result. For example, the general capability may be an algorithm or a general system, for example, translation, text analysis, computer vision processing, speech recognition, or image recognition.

### (5) Intelligent product and industry application

The intelligent product and industry application are products and applications of the artificial intelligence system in various fields, and package overall artificial intelligence solutions, to productize and apply intelligent information decision-making. Application fields mainly include smart terminals, intelligent transportation, smart health care, autonomous driving, smart cities, and the like.

This application may be applied to the image processing field in the artificial intelligence field. The following describes a plurality of application scenarios implemented into a product by using image processing as an example.

Application scenarios of this application are first described.

In some scenarios, an image processing function can be used as a core algorithm module of a robot visual language navigation system. For example, a user wants to instruct, by using a language instruction, a home robot to walk to a chair and take a vase. The robot needs to accurately segment or detect target instances, namely, the chair and the vase, described in the language, and then complete a task of taking the vase.

In some scenarios, an image processing function may be applied to an autonomous driving platform. When a user interacts with an intelligent driving system in a natural language, and the user requests to park behind a yellow vehicle in the right front, an identification module of the intelligent driving system needs to first understand a natural language instruction of the user, and accurately segment or detect the yellow vehicle, to meet a requirement of the user.

In some scenarios, an image processing function may be applied to an interactive image editing system. The system needs to modify a picture according to a requirement described by a user in a natural language. The image processing function may locate a region that the user wants to modify, and then modify content of the picture with reference to an existing picture editing tool.

This application may be applied to, but not limited to, an application of an image processing function (which may be referred to as an image processing application for short below), a cloud service provided by a cloud server, or the like. The following provides respective descriptions.

### 1. Language-driven image processing application

A product form in embodiments of this application may be an image processing application, and in particular, may be a language-driven image processing application. The language-driven image processing application may be run on a terminal device or a cloud server.

In a possible implementation, the language-driven image processing application may implement a task such as image segmentation or target detection based on an input image and text, to obtain a processing result. The processing result may be an image segmentation result (a mask region) and a detection box. The image segmentation result (the mask region) and the detection box may include an object (for example, a target object in embodiments of this application) indicated by semantics of the text.

In a possible implementation, a user may start an image processing application installed on a terminal device, and input an image and a text. The image processing application may process the image and the text by using the method provided in embodiments of this application, and present a processing result to the user (where a presentation manner may be but is not limited to displaying, saving, uploading to a cloud side, or the like).

In a possible implementation, a user may start an image processing application installed on a terminal device, and input an image and a text. The image processing application may send the image and the text to a cloud server. The cloud server processes the image and the text by using the method provided in embodiments of this application, and sends a processing result back to the terminal device. The terminal device may present the processing result to the user (where a presentation manner may be but is not limited to displaying, saving, uploading to a cloud side, or the like).

The following describes the image processing application in embodiments of this application separately from a functional architecture and a product architecture for implementing a function.

FIG. 1B is a diagram of a functional architecture of an image processing application according to an embodiment of this application.

In a possible implementation, as shown in FIG. 1B, an image processing application 102 may receive an input parameter 101 (for example, including an image) and generate a processing result 103. The image processing application 102 may be executed (for example) on at least one computer system, and includes computer code. When the computer code is executed by one or more computers, the computer is enabled to perform the method provided in embodiments of this application.

FIG. 1C is a diagram of a system architecture for running an image processing application according to an embodiment of this application.

FIG. 1C is a diagram of a system architecture. The system may include a terminal 100 and a server 200. The server 200 may include one or more servers (in FIG. 1C, an example in which one server is included is used for description), and the server 200 may provide the method provided in embodiments of this application for one or more terminals.

An image processing application may be installed on the terminal 100. The application may provide an interface. The terminal 100 may receive a related parameter input by a user on the language-driven image processing interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter without cooperation of the server. This is not limited in embodiments of this application.

The following describes a product form of the terminal 100 in FIG. 1C.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

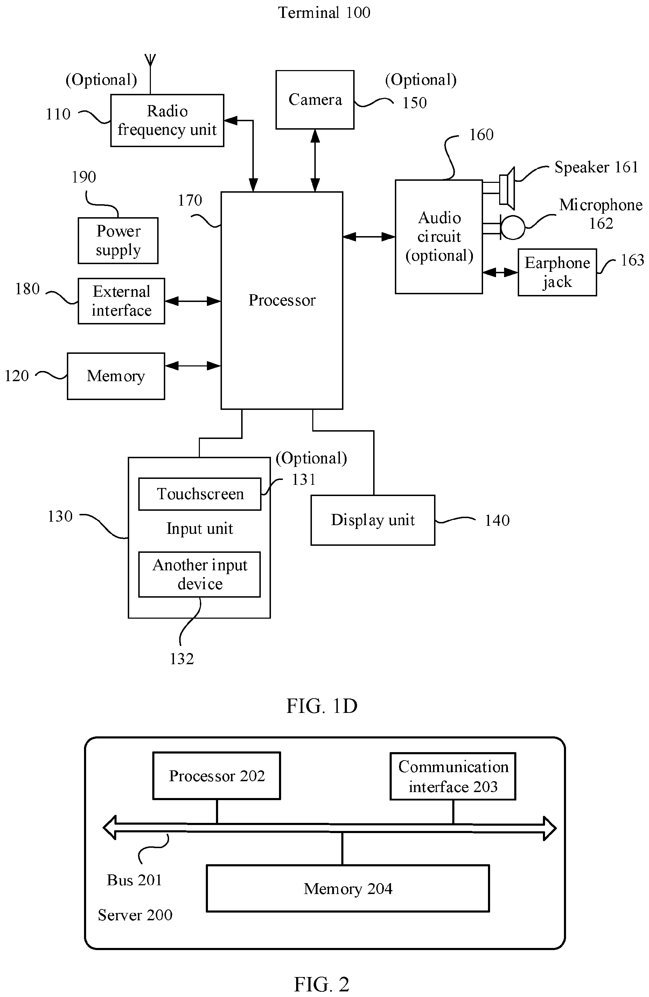

FIG. 1D is a diagram of an optional hardware structure of the terminal 100.

Refer to FIG. 1D. The terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of the terminal or a multi-functional device and does not constitute a limitation on the terminal or the multi-functional device. The terminal or the multi-functional device may include more or fewer components than those shown in the figure, or combine some components, or have different components.

The input unit 130 may be configured to: receive input digital or character information, and generate a key signal input related to a user setting and function control of a portable multi-functional apparatus. Specifically, the input unit 130 may include a touchscreen 131 (optional) and/or another input device 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch operation performed by the user on the touchscreen, convert the touch operation into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared ray type, and a surface acoustic wave type. In addition to the touchscreen 131, the input unit 130 may further include the another input device. Specifically, the another input device 132 may include but is not limited to one or more of the following: a physical keyboard, a functional key (such as a volume control key or an on/off key), a trackball, a mouse, a joystick, and the like.

The another input device 132 may receive an input image, an input text, or the like.

The display unit 140 may be configured to display information input by the user, information provided for the user, various menus of the terminal 100, an interaction interface, a file, and/or playing of any multimedia file. In embodiments of this application, the display unit 140 may be configured to display an interface, a processing result, and the like of an image processing application.

The memory 120 may be configured to store instructions and data. The memory 120 may mainly include an instruction storage area and a data storage area. The data storage area may store various kinds of data such as a multimedia file and a text. The instruction storage area may store software units such as an operating system, an application, and instructions required by at least one function, or subsets and extended sets thereof. The memory 120 may further include a non-volatile random access memory, and provide hardware, software, a data resource, and the like in a management and calculation processing device to the processor 170, to support control on software and an application. The memory 120 is further configured to: store a multimedia file, run a program, and store an application.

The processor 170 is a control center of the terminal 100, connects parts of the whole terminal 100 by using various interfaces and lines, and executes various functions of the terminal 100 and processes data by running or executing the instructions stored in the memory 120 and invoking the data stored in the memory 120, to entirely control the terminal 100. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In some embodiments, the processor and the memory may be implemented on separate chips. The processor 170 may be further configured to: generate a corresponding operation control signal, send the operation control signal to a corresponding component in the calculation processing device, and read and process data in software, especially read and process the data and the program in the memory 120, so that functional modules perform corresponding functions, to control a corresponding component to perform an operation as required by an instruction.

The memory 120 may be configured to store software code related to the data processing method. The processor 170 may perform steps of the data processing method of a chip, or may schedule another unit (for example, the input unit 130 and the display unit 140) to implement a corresponding function.

The radio frequency unit 110 (optional) may be configured to receive and send a signal in an information receiving and sending process or a call process. For example, after receiving downlink information of a base station, the radio frequency unit 110 sends the downlink information to the processor 170 for processing. In addition, the radio frequency unit 110 sends uplink-related data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. The wireless communication may use any communication standard or protocol, including but not limited to a global system for mobile communication (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send an image to a server 200, and receive a processing result sent by the server 200.

It should be understood that the radio frequency unit 110 is optional, and may be replaced with another communication interface, for example, may be a network interface.

The terminal 100 further includes the power supply 190 (such as a battery) for supplying power to various components. Preferably, the power supply may be logically connected to the processor 170 by using a power management system, so that functions such as charging and discharging management and power consumption management are implemented by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of the methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

The processor 202 may be any one or more of processors such as a central processing unit (central processing unit CPU), a graphics processing unit (graphics processing unit, GPU), a microprocessor (microprocessor, MP), or a digital signal processor (digital signal processor DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 204 may be configured to store software code related to the data processing method. The processor 202 may perform steps of a data processing method of a chip, or may schedule another unit to implement a corresponding function.

It should be understood that the terminal 100 and the server 200 may be central or distributed devices. Processors (for example, the processor 170 and the processor 202) in the terminal 100 and the server 200 may be a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, such as a CPU or a DSP, or may be a hardware system that does not have an instruction execution function, such as an ASIC or an FPGA, or may be a combination of the hardware system that does not have an instruction execution function and the hardware system that has an instruction execution function.

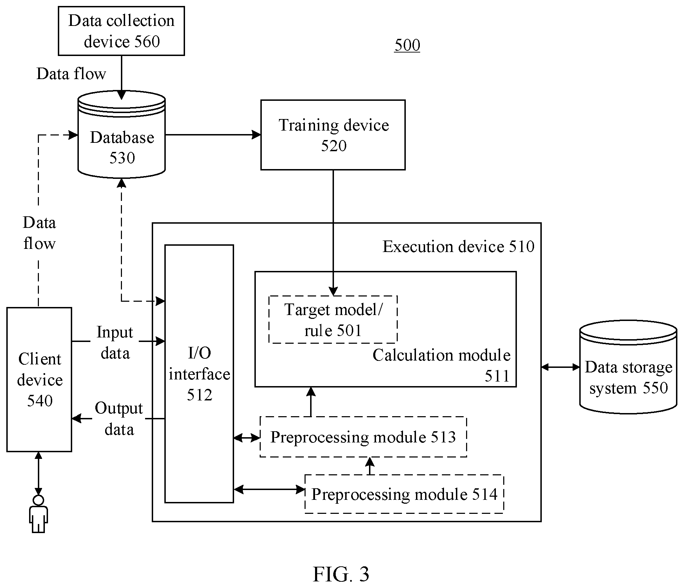

It should be understood that steps related to a model inference process in embodiments of this application relate to an AI-related operation. When the AI operation is performed, an instruction execution architecture of the terminal 100 and the server is not limited to the architecture in which the processor and the memory are combined. The following describes in detail a system architecture provided in embodiments of this application with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection device 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be the terminal 100 or the server that runs the image processing application.

The data collection device 560 is configured to collect a training sample. The training sample may be a plurality of images or the like. After collecting the training sample, the data collection device 560 stores the training sample in the database 530.

The training device 520 may train a to-be-trained neural network (for example, a cross-modal language model (for example, including a text encoder, an image encoder, and a target encoder) in embodiments of this application) based on the training sample maintained in the database 530, to obtain the target model/rule 501.

It should be understood that the training device 520 may perform a pre-training process on the to-be-trained neural network based on the training sample maintained in the database 530, or perform fine tuning on a model based on pre-training.

It should be noted that, during actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another position. The foregoing descriptions should not be construed as a limitation on embodiments of this application.

The target model/rule 501 obtained by the training device 520 through training may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 3, the input/output (input/output, I/O) interface 512 is configured for the execution device 510, and is configured to exchange data with an external device. A user may input data (for example, an image in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

In a process in which the execution device 510 preprocesses the input data or the calculation module 511 of the execution device 510 performs related processing like computing, the execution device 510 may invoke data, code, and the like in the data storage system 550 for corresponding processing; and may store, in the data storage system 550, data, instructions, and the like that are obtained through corresponding processing.

Finally, the I/O interface 512 provides a processing result to the client device 540, to provide the processing result to the user.

In the case shown in FIG. 3, the user may manually give input data, and the "manually given input data" may be operated on an interface provided by the I/O interface 512. In another case, the client device 540 may automatically send the input data to the I/O interface 512. If the client device 540 is required to obtain authorization of the user when automatically sending the input data, the user may set corresponding permission on the client device 540. The user may view, on the client device 540, a result output by the execution device 510. A specific presentation form may be a specific manner such as display, sound, or action. The client device 540 may alternatively serve as a data collection end, collect the input data input to the I/O interface 512 and the output result output from the I/O interface 512 that are shown in the figure as new sample data, and store the new sample data in the database 530. Certainly, collection may alternatively be performed without using the client device 540, but the I/O interface 512 directly stores the input data input to the I/O interface 512 and the output result output from the I/O interface 512 that are shown in the figure in the database 530 as new sample data.

It should be noted that FIG. 3 is merely a diagram of the system architecture according to this embodiment of this application. A position relationship between a device, a component, a module, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:
In embodiments of this application, the calculation module 511 in the execution device 510 may obtain the code stored in the data storage system 550, to implement steps related to a model inference process in embodiments of this application.

In embodiments of this application, the calculation module 511 in the execution device 510 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, such as a CPU or a DSP, or may be a hardware system that does not have an instruction execution function, such as an ASIC or an FPGA, or may be a combination of the hardware system that does not have an instruction execution function and the hardware system that has an instruction execution function.

Specifically, the calculation module 511 in the execution device 510 may be a hardware system that has an instruction execution function. The steps related to the model inference process provided in embodiments of this application may be software code stored in a memory. The calculation module 511 in the execution device 510 may obtain the software code from the memory, and execute the obtained software code to implement the steps related to the model inference process provided in embodiments of this application.

It should be understood that the calculation module 511 in the execution device 510 may be a combination of a hardware system that does not have an instruction execution function and a hardware system that has an instruction execution function. Some of the steps related to the model inference process provided in embodiments of this application may be implemented by the hardware system that does not have an instruction execution function in the calculation module 511 in the execution device 510. This is not limited herein.

Details from a perspective of model training are as follows:
In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, such as a CPU or a DSP, or may be a hardware system that does not have an instruction execution function, such as an ASIC or an FPGA, or may be a combination of the hardware system that does not have an instruction execution function and the hardware system that has an instruction execution function.

It should be understood that the training device 520 may be a combination of a hardware system that does not have an instruction execution function and a hardware system that has an instruction execution function. Some of the steps related to model training provided in embodiments of this application may be implemented by the hardware system that does not have an instruction execution function in the training device 520. This is not limited herein.

### 2. Language-driven image processing cloud service provided by a server

In a possible implementation, the server may provide a language-driven image processing service for a terminal side through an application programming interface (application programming interface, API).

A terminal may send a related parameter (for example, an image) to the server through the API provided by a cloud. The server may obtain a processing result or the like based on the received parameter, and return the processing result to the terminal.

For descriptions about the terminal and the server, refer to the descriptions in the foregoing embodiments. Details are not described herein again.

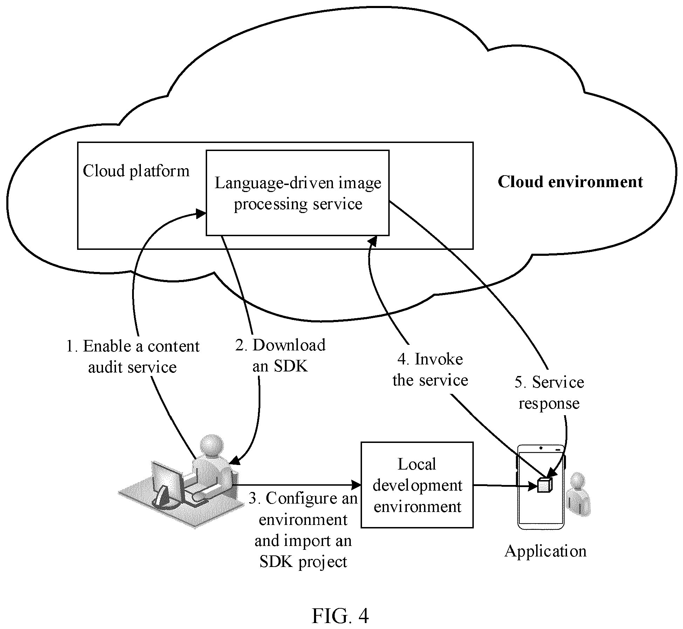

FIG. 4 shows a process of using a language-driven image processing cloud service provided by a cloud platform.
1. Enable and purchase a content audit service.
2. A user may download a software development kit (software development kit, SDK) corresponding to the content audit service. Usually, the cloud platform provides SDKs of a plurality of development versions for the user to select according to a development environment requirement, for example, a Java-version SDK, a Python-version SDK, a PHP-version SDK, and an Android-version SDK.
3. After locally downloading an SDK of a corresponding version according to the requirement, the user imports an SDK project to a local development environment, and performs configuration and debugging in the local development environment. Another function may be further developed in the local development environment, to form an application that integrates language-driven image processing capabilities.
4. In a process in which the language-driven image processing application is used, when language-driven image processing needs to be performed, invoking of a language-driven image processing API may be triggered. When an application triggers a language-driven image processing function, an API request is initiated to a running instance of a language-driven image processing service in a cloud environment. The API request carries an image, and the running instance in the cloud environment processes the image to obtain a processing result.
5. The cloud environment returns the processing result to the application, to complete one time of invoking the method provided in embodiments of this application.

Embodiments of this application relate to massive application of a neural network. Therefore, for ease of understanding, the following first describes terms and concepts related to the neural network in embodiments of this application.

### (1) Neural network

The neural network may include a neuron. The neuron may be an operation unit that uses xₛ (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

Herein, s=1, 2, ..., and n, n is a natural number greater than 1, Wₛ is a weight of xₛ, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

### (2) Transformer layer

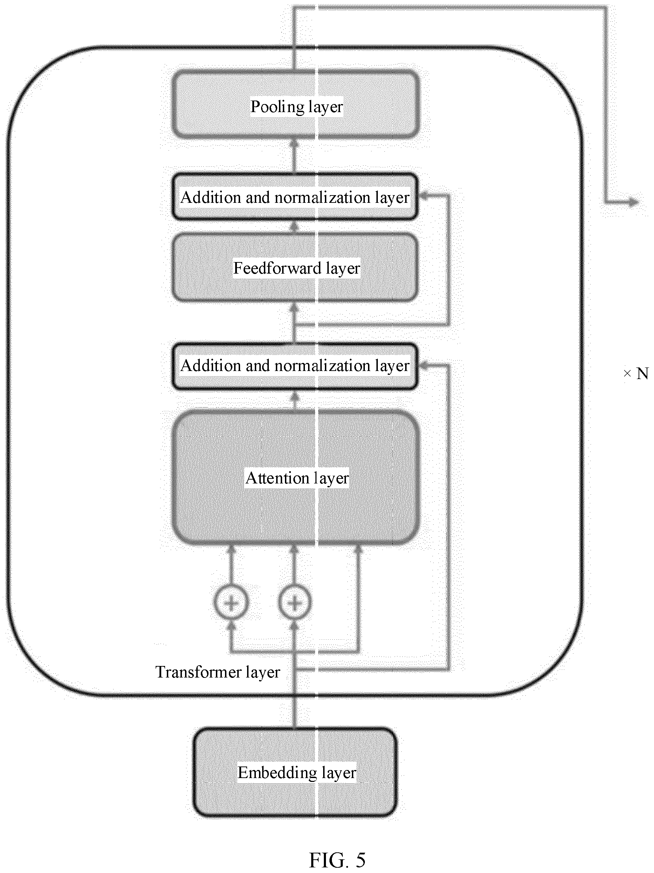

FIG. 5 is a diagram of an architecture of a transformer layer. As shown in FIG. 5, a neural network includes an embedding layer and at least one transformer layer. The at least one transformer layer may be N transformer layers (where N is an integer greater than 0). Each transformer layer includes an attention layer, an addition and normalization (add&norm) layer, a feedforward (feed-forward) layer, and an addition and normalization layer, and a pooling layer, that are sequentially adjacent. At the embedding layer, embedding processing is performed on a current input to obtain a plurality of embedding vectors. At the attention layer, P input vectors are obtained from a previous layer of a first transformer layer. Any first input vector in the P input vectors is used as a center. An intermediate vector corresponding to the first input vector is obtained based on an association degree between the first input vector and each input vector within a preset attention window range. In this way, P intermediate vectors corresponding to the P input vectors are determined. At the pooling layer, the P intermediate vectors are combined into Q output vectors. A plurality of output vectors obtained at a last transformer layer in the transformer layers are used as a feature representation of the current input.

### (3) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

Herein, Lx=||Source|| represents a length of a source. The formula means that constituent elements in the source are assumed to include a series of data pairs. In this case, an element query in a target (target) is provided, a similarity or a correlation between the query and each key is calculated to obtain a weight coefficient of a value corresponding to each key, and then weighted summation is performed on values, to obtain a final attention value. Therefore, in essence, the attention mechanism is to perform weighted summation on values of the elements in the source, and the query and the keys are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value (value) corresponding to the weight is more focused. That is, the weight indicates importance of information, and the value is information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

### (4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. Through NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

### (5) Pre-trained language model (pre-trained language model)

The pre-trained language model is a natural language sequence encoder, and encodes each word in a natural language sequence into a vector representation to execute a prediction task. Training for the pre-trained language model includes two phases. In a pre-training (pre-training) phase, the model is trained for a language model task on a large scale of unsupervised texts to learn a word representation. In a fine tuning (fine tuning) phase, the model is initialized by using parameters learned in the pre-training phase, and is trained in few steps on downstream tasks (downstream tasks) such as text classification (text classification) and sequence labeling (sequence labeling), so that semantic information obtained through pre-training can be successfully migrated to the downstream tasks.

### (6) Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

### (7) Loss function

In a process of training a deep neural network, because it is expected that an output of the deep neural network is maximally close to a predicted value that is actually expected, a predicted value of a current network may be compared with a target value that is actually expected, and then a weight vector at each layer of the neural network is updated based on a difference between the predicted value and the target value (certainly, there is usually an initialization process before a first update, that is, parameters are preconfigured for each layer of the deep neural network). For example, if the predicted value of the network is large, the weight vector is adjusted to lower the predicted value, and adjustment is continuously performed, until the deep neural network can predict the target value that is actually expected or a value close to the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

Language-driven precise instance segmentation is a special semantic segmentation technology, and is to accurately segment, according to a natural language instruction, an instance target described by a language in a picture. Characteristics of language-driven precise instance segmentation are as follows: (1) A conventional semantic segmentation model predicts a same label for all targets of a same category, and does not distinguish between different targets of a same category. However, language-driven precise instance segmentation needs to accurately recognize an instance target corresponding to a language description from a plurality of targets of a same category. (2) A semantic segmentation model needs to predefine labels of a group of semantic categories, to learn to segment targets of these categories. However, language-driven precise instance segmentation may receive more flexible natural language inputs, and does not limit the target categories.

Due to flexibility of the natural language input, a language-driven instance segmentation method mainly relies on fusion of natural language sentence encoding and visual encoding of an image, to activate a region highly correlated with language encoding in a visual feature map. However, a cross-modal feature fusion solution mainly has two challenges: One is that an instance target is not accurately located, and a single instance target cannot be accurately locked in a plurality of congested targets of a same category. The other one is that a predicted mask is not accurate enough, and is easy to be overflowed to adjacent targets of a same category.

To resolve the foregoing problem, embodiments of this application provide a data processing method. The following describes in detail the data processing method in embodiments of this application with reference to the accompanying drawings.

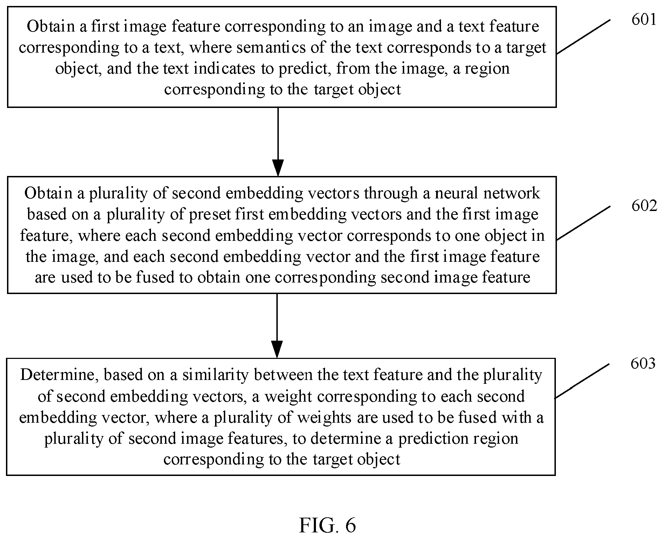

FIG. 6 is a schematic flowchart of a data processing method according to an embodiment of this application. As shown in FIG. 6, the data processing method provided in this embodiment of this application may include steps 601 to 603. The following separately describes these steps in detail.

601: Obtain a first image feature corresponding to an image and a text feature corresponding to a text, where semantics of the text corresponds to a target object, and the text indicates to predict, from the image, a region corresponding to the target object.

In a possible implementation, the semantics of the text may indicate to determine, from the image, a mask region (an image segmentation task) or a detection box (a target detection task) corresponding to the target object.

In a possible implementation, the semantics of the text is used to describe a feature of the target object. For example, the image includes two vases, which are red and yellow respectively, and the text may be "a red vase". For example, the image includes two vases, which are respectively located on a left side and a right side of the image, and the text may be "the vase on the left side".

In a possible implementation, after the image and the text are obtained, feature extraction and alignment may be performed on the image and the text, to obtain the first image feature corresponding to the image and the text feature corresponding to the text.

In a possible implementation, the obtaining a first image feature corresponding to an image and a text feature corresponding to a text specifically includes: processing the image by using an image encoder, to obtain a third image feature corresponding to the image; processing the text by using a text encoder, to obtain a first text feature corresponding to the text; and fusing the third image feature and the first text feature by using a bidirectional attention mechanism, to obtain the first image feature corresponding to the image and the text feature corresponding to the text.

For example, the image encoder fᵥ (or may be referred to as a visual encoder) may extract a multi-level visual feature for a given visual image I by using a Swin Transformer as a visual encoder, and multi-scale visual features generated in a plurality of phases (for example, four phases) in the Swin Transformer are denoted as ${\left\{{V}_{i}\right\}}_{i = 1}^{4}$.

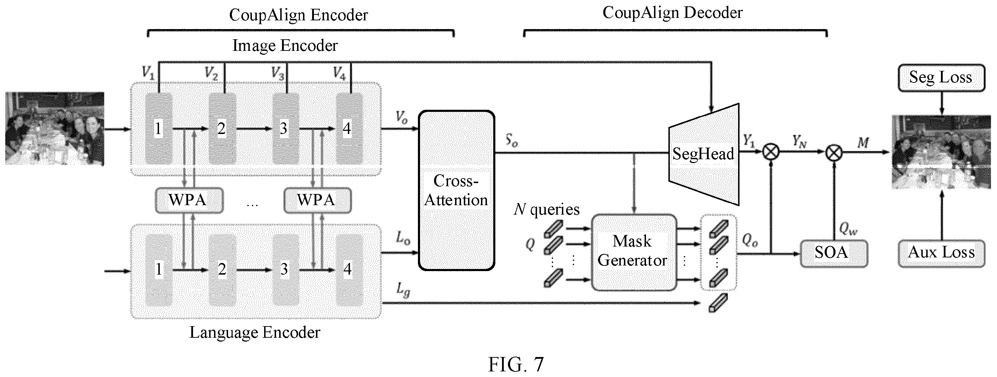

For example, the text encoder fₗ (or may be referred to as a language encoder) may use a multi-layer BERT (for example, 12 layers) as a language encoder. For a given language expression W = {wᵢ}_{i=1,..,T}, T is a length of the expression. An embedded word vector E is first obtained by using a WordPiece-based BERT tokenizer, and E is sent to a hidden encoding layer of the BERT to extract a language feature. To align with visual features output in the four phases of the Swin Transformer, every three layers in the BERT may be aggregated and defined as a phase. In this way, language features whose quantity is the same as that of visual features may be obtained, denoted as ${\left\{{L}_{i}\right\}}_{i = 1}^{4}$. With reference to FIG. 7, a corresponding language feature may also be tokenized by using [CLS] subsequently, so that the corresponding language feature is used as a global semantic expression vector, which is denoted as L_{g}.

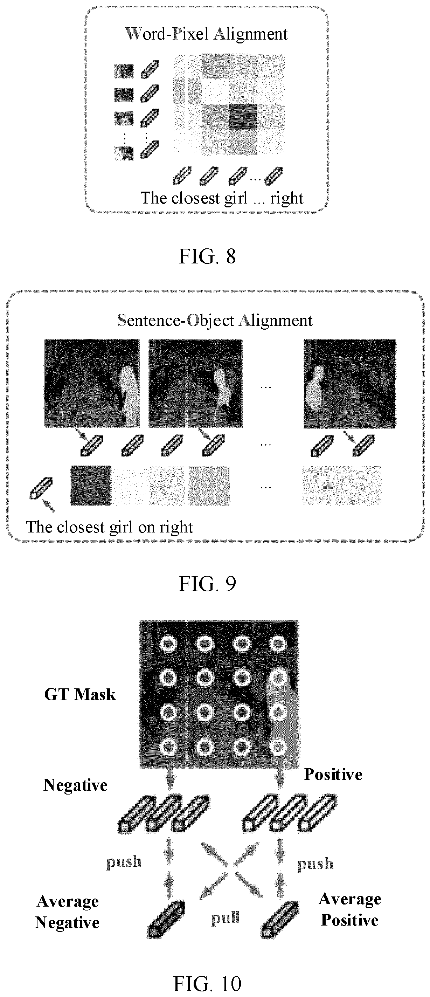

In a possible implementation, a word-pixel alignment (word-pixel alignment) module may be used to implement a bidirectional attention mechanism. The word-pixel alignment module is a cross-modal bidirectional attention module with a threshold. In an image and sentence encoding phase, visual and language features are aligned in feature space. A learnable feature threshold mechanism is used to prevent original feature information from being overwhelmed when a fused feature is updated. Alignment effect of word-pixel alignment may be shown in FIG. 8. In a visual and language information encoding phase, the word-pixel alignment module integrates language information into visual encoding, and also integrates visual information into language encoding, so that a correlation between a word feature of a sentence and a corresponding pixel feature in a picture is established in cross-modal feature space.

In a possible implementation, the cross-modal bidirectional attention module BiAttn exchanges information about the visual and language features in feature space. This module is used to fuse visual and language features of each phase of a dual encoder. Optionally, an operation of the module is defined as follows: ${V}_{i}^{′} , {L}_{i}^{′} = BiAttn \left({V}_{i}, {L}_{i}\right) , i ∈ \left\{1,…,4\right\}$

A specific calculation process of a BiAttn function is as follows: ${\hat{V}}_{i} = {V}_{i} {W}_{ν} , {\hat{L}}_{i} = {L}_{i} {W}_{l} , Attn = {\hat{V}}_{i} {\hat{L}}_{i}^{T} / \sqrt{{d}_{k}} ,$ ${V}_{i}^{′} = softmax \left(Attn\right) {\hat{L}}_{i} {W}_{ν}^{′} ,$ ${L}_{i}^{′} = softmax \left({Attn}^{T}\right) {\hat{V}}_{i} {W}_{l}^{′}$

dₖ is a dimension of joint visual-language embedding space, and Wᵥ, Wₗ, ${W}_{v}^{′}$, and ${W}_{l}^{′}$ are all projection matrices. Optionally, to prevent a fused feature ${V}_{i}^{′} , {L}_{i}^{′}$ from completely overwriting information about original features Vᵢ and Lᵢ, a multi-layer perceptron MLP is designed as a GATE to control an amount of information flowing into the fused feature: ${V}_{i}^{′} ← Gate \left({V}_{i}^{′}\right) , { L}_{i}^{′} ← Gate \left({{L}_{i}}^{′}\right) ; and$ ${F}_{i}^{′} = GATE \left({F}_{i}\right) = MLP \left({F}_{i}\right) ⊙ {F}_{i}$

Fᵢ represents a fused feature from a BCA module, ${F}_{i}^{′}$ represents a suppressed fused feature, and ⊙ represents matrix element-by-element multiplication. The MLP is a two-layer perceptron. A first layer is a linear layer, followed by a ReLU activation function, and a second layer is a linear layer, followed by a hyperbolic tangent activation function.

In a possible implementation, to better capture high-layer semantics and generate pixel-level fused features, a multi-head attention layer may be used to fuse high-layer features from visual and language encoders. First, a high-layer visual feature Vₒ and language feature Lₒ are projected into same feature space, and then are concatenated into a fused feature Fₒ, which is then sent to a cross-attention layer. Before concatenation, a learnable position vector eₚ is added to the projected visual feature. Finally, the cross-attention layer outputs a feature Sₒ. The foregoing operation may be expressed as the following formula: ${{V}^{′}}_{o} = {V}_{o} {W}_{o}^{ν} + {e}_{p} , {{L}^{′}}_{o} = {L}_{o} {W}_{o}^{l} ,$ ${S}_{o} = CrossAttn \left({F}_{o}\right) + {V}_{o} , {F}_{o} = \left[{V}_{o}^{′}; {L}_{o}^{′}\right]$ ${W}_{o}^{v}$ and ${W}_{o}^{l}$ are projection matrices, and [;] is a tensor concatenation operation.

In a possible implementation, to upsample a pixel-level feature to a size of an original image to obtain a final segmentation image, a segmentation head may be constructed. For example, an input of the segmentation head may be Sₒ and a multi-scale visual feature ${\left\{{V}_{i}\right\}}_{i = 1}^{4}$, and then the following output is obtained: $\left\{\begin{matrix}{Y}_{5} = {S}_{o} , \\ {Y}_{i} = Up \left(ρ\left({Y}_{i + 1}\right)\right) + γ \left({V}_{i}\right) , i = 4 , 3 , 2 , 1\end{matrix}\right.$ ρ is a two-layer convolutional network, each layer is a 3×3 convolution plus ReLU and batch normalization, Up represents bilinear interpolation upsampling, γ represents a 1×1 convolution, feature projection is performed on each pixel of ${\left\{{V}_{i}\right\}}_{i = 1}^{4}$, and the output of the segmentation head is denoted as Yᵢ.

602: Obtain a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature.

The neural network may process the plurality of first embedding vectors into the plurality of second embedding vectors based on the first image feature. Each second embedding vector may correspond to one candidate region of the target object, and different second embedding vectors may correspond to different or overlapping candidate regions of the target object.

This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve segmentation precision.

In a possible implementation, the neural network includes a plurality of transformer layers.

Image segmentation is used as an example. A sentence-object alignment module first generates possible target masks based on a word-pixel aligned feature, and then aligns natural language sentence features with the target masks, to more accurately locate a target instance, as shown in FIG. 9. In this embodiment of this application, a mask generator MaskGenerator is designed to predict N possible target masks based on an output Sₒ of an encoder. The mask generator includes a 6-layer transformer decoder. An input of the mask generator is Sₒ and N learnable first embedding vectors (namely, a query vector Q), and an output of the mask generator is N second embedding vectors (namely, a target mask feature vector Qₒ), that is: ${Q}_{o} = MaskGenerator \left(Q, {S}_{o}\right)$

603: Determine, based on a similarity between the text feature and the plurality of second embedding vectors, a weight corresponding to each second embedding vector, where a plurality of weights are used to be fused with a plurality of second image features, to determine a prediction region corresponding to the target object.

Because only some of the plurality of second embedding vectors correspond to the target object, after the plurality of second embedding vectors are obtained, one weight value may be allocated to each second embedding vector based on the text feature, and a second embedding vector with a larger weight value is most likely to include the target object indicated by the text.

An image segmentation task is used as an example. One weight value Q_{w} may be allocated to each mask vector (the second embedding vector) of Qₒ based on a text feature L_{g}, and a larger weight in Q_{w} indicates that a corresponding mask is most likely to include an object indicated by a language. Then, N mask predictions Y_{N} are obtained by multiplying Qₒ and Y₁. Finally, a final mask prediction M is obtained by multiplying Y_{N} and Q_{w}. This process may be expressed as follows: ${Q}_{w} = softmax \left(sim\left({L}_{g}, {Q}_{o}\right)\right) ,$ $M = {Y}_{N} ⊗ {Q}_{w} , {Y}_{N} = {Y}_{1} ⊗ {Q}_{o}$ sim(,) represents a cosine similarity function, and ⊗ represents broadcast tensor multiplication.

FIG. 7 is a diagram of a network architecture according to an embodiment of this application. An overall architecture design of the network architecture complies with a classic encoder-decoder paradigm. For the encoder part, a visual encoder and a language encoder are used to extract visual and language features, and a word-pixel alignment (WPA) module is located at an intermediate layer of the visual and language encoders, to implement cross-modal interaction. Then, a cross-attention layer is used to perform cross-modal fusion on outputs of the visual and language encoders. The decoder part includes a mask generator that generates N mask query vectors, a segmentation head that upsamples pixel features, and a sentence-object alignment (SOA) module. The sentence-object alignment module grants a weight to an output mask query vector based on a sentence feature, and adds the weight to perform weighted summation on segmentation features generated by the segmentation head to obtain a final segmentation mask.

For a training process of the model, an image segmentation task is used as an example. For reference image segmentation, each pixel in an image needs to be classified into a foreground or a background. Therefore, the task may be considered as a pixel-level binary classification task. Specifically, bilinear interpolation is used to upsample M to a size of an original image, to obtain M'. Values of each point i of M' and M (a true mask) are set to be ${m}_{i}^{′}$ and m̂ᵢ respectively. A segmentation loss form is as follows: ${L}_{j}^{Seg} = - \frac{1}{H \times W} {\sum }_{i = 1}^{H \times W} {\hat{m}}_{i} log \left(σ\left(m{′}_{i}\right)\right) + \left(1-{\hat{m}}_{i}\right) log \left(1-σ\left({m}_{i}^{′}\right)\right)$

σ represents a sigmoid function, and j represents a j^{th} image in a training batch.

In addition, to enhance a capability of the model to separate the foreground and the background, a pixel-level contrastive loss function may be used as an auxiliary function of a segmentation loss. The function reduces a distance between pixel features inside a target object, and increases a distance between the pixel features inside the target object and pixel features outside the target object, as shown in FIG. 10.

The true mask M̂ is scaled to a same size as a segmentation feature map Y₁. A vector of each point i in Y₁ is set to be yᵢ. Then, a priori of M is used to classify yᵢ into positive and negative samples. For each point i, if m̂ᵢ is equal to 0, yᵢ belongs to a negative sample set N, and is denoted as ${y}_{i}^{-}$; otherwise, yᵢ belongs to a positive sample set P, and is denoted as ${y}_{i}^{+}$. Then, mean vectors of the positive samples and the negative samples are respectively denoted as ŷ⁺ and ŷ⁻. A form of the auxiliary loss function is as follows: ${L}_{P 2 N}^{Aux} = - \frac{1}{\left|P\right|} {\sum }_{{y}_{i}^{+} ∈ P} \frac{exp \left({y}_{i}^{+}⋅{\hat{y}}^{+}/τ\right)}{exp \left({y}_{i}^{+}⋅{\hat{y}}^{+}/τ\right) + {\sum }_{{y}_{k}^{-} ∈ N} exp \left({y}_{i}^{+}⋅{y}_{k}^{-}/τ\right)} ,$ ${L}_{N 2 P}^{Aux} = - \frac{1}{\left|N\right|} {\sum }_{{y}_{i}^{+} ∈ N} \frac{exp \left({y}_{i}^{-}⋅{\hat{y}}^{-}/τ\right)}{exp \left({y}_{i}^{-}⋅{\hat{y}}^{-}/τ\right) + {\sum }_{{y}_{k}^{+} ∈ P} exp \left({y}_{i}^{-}⋅{y}_{k}^{+}/τ\right)} ,$ ${L}_{j}^{Aux} = {L}_{P 2 N}^{Aux} + {L}_{N 2 P}^{Aux}$

τ is a temperature coefficient. Finally, a total loss function is as follows: $L = \frac{1}{B} {\sum }_{j = 1}^{B} \left({L}_{j}^{Seg}+{λL}_{j}^{Aux}\right)$

After model training ends, in an inference phase, a picture and a natural language sentence describing an instance target in the picture are input, and the model directly predicts a mask M or a detection box of the instance target, upsamples the mask or the detection box back to a size of an original image through interpolation, and performs binarization to segment the instance target.

The following describes beneficial effects of this application with reference to experiments.

There are three common datasets for reference image segmentation: RefCOCO, RefCOCO+, and RefCOCOg (which is also referred to as G-Ref). Images of the three datasets are all from an MSCOCO dataset, and each is paired with different language annotations. The language annotations on RefCOCO and RefCOCO+ are generated by a game named ReferItGame. RefCOCO includes 142,209 natural language annotations and 19,994 pictures. RefCOCO+ includes 141,564 natural language annotations and 19,992 pictures. A main difference between the two datasets: RefCOCO and RefCOCO+, is that RefCOCO+ does not allow locating words such as "left" and "front" in language annotations. Therefore, the RefCOCO+ dataset is more challenging than RefCOCO. The language annotations on the G-Ref dataset are from Amazon Mechanical Turk and the G-Ref dataset includes 85,474 language annotations and 26,711 pictures. In addition, the dataset has two division manners: UMD division and Google division. The language annotations on G-Ref are more complex and changeable than those on RefCOCO and RefCOCO+, and an average length of sentences in G-Ref is greater than that in the RefCOCO and RefCOCO+ datasets. In this case, G-Ref is a more challenging dataset.

Original input data is an RGB image, a 0-1 mask matrix, and a language annotation string. Preprocessing of some image data is as follows: Normalize the RGB image in training data, regularize the image, and scale the image to a unified resolution 448*448 through bilinear interpolation. In addition, the 0-1 mask matrix is scaled, through nearest-neighbor interpolation, to a resolution consistent with that of the RGB image. For test data, only the RGB image needs to be processed as described above, and nearest-neighbor interpolation does not need to be performed on the 0-1 mask matrix. Preprocessing of language data is as follows: Use BertTokenizer in a Hugging Face library to tokenize an input character string. BertTokenizer is based on a WordPiece embedding method, and a dictionary size of BertTokenizer is 30,000. For each tokenized sequence, a 1^{st} token is a special [CLS] token. If a plurality of sentences are input, another special [SEP] token is inserted between sentences.

Performance of a model is evaluated by using the following three common measurement methods of reference image segmentation: overall intersection over union (oIoU), mean intersection over union (mIoU), and prec@X. The three measurement methods all commonly use a measurement indicator for target recognition, namely, an intersection over union (IoU), which mainly indicates a similarity between a prediction region and a true region. In reference image segmentation, a method of calculating the intersection over union may be simplified as follows: A prediction mask *M* and a true mask M are given, and the intersection over union is defined as follows: $IoU = \frac{M ∩ \hat{M}}{M ∪ \hat{M}}$

The overall intersection over union is a ratio of a sum of intersections of all test images to a sum of unions of all the test images. The mean intersection over union is an average value of intersection over unions of all the test images. prec@X is a percentage of images whose intersection over unions are greater than a threshold X to all the test images. In an experiment, a value of X is usually 0.5, 0.6, 0.7, 0.8, or 0.9.

**Table 1 Comparison of methods in a conventional technology on the two datasets RefCOCO and G-Ref**

| Method | Backbone | RefCOCO | | | G-Ref | |
|---|---|---|---|---|---|---|
| | | val | testA | testB | val(U) | test(U) |
| BRINet[57] | ResNet101 | 60.98 | 62.99 | 59.21 | - | - |
| CMPC[58] | ResNet101 | 61.36 | 64.53 | 59.64 | - | - |
| LSCM[59] | ResNet101 | 61.47 | 64.99 | 59.55 | - | - |
| CGAN[60] | ResNet101 | 64.86 | 68.04 | 62.07 | 51.01 | 51.69 |
| BUSNet[9] | ResNet101 | 63.27 | 66.41 | 61.39 | - | - |
| EFN[8] | ResNet101 | 62.76 | 65.69 | 59.67 | - | - |
| LTS[6] | DarkNet53 | 65.43 | 67.76 | 63.08 | 54.40 | 54.25 |
| VLT[46] | DarkNet53 | 65.65 | 68.29 | 62.73 | 52.99 | 56.65 |
| ReSTR[61] | ViT-B-16 | 67.22 | 69.30 | 64.45 | 54.48 | - |
| CRIS[47] | CLIP-ResNet101 | 70.47 | 73.18 | 66.10 | 59.87 | 60.36 |
| LAVT[10] | Swin-B | 72.73 | 75.82 | 68.79 | 61.24 | 62.09 |
| CoupAlign (Ous) | Swin-B | 74.70 | 77.76 | 70.58 | 62.84 | 62.22 |

In Table 1, CoupAlign is compared with a previous SOTA method in terms of oIoU on RefCOCO and G-Ref. Language annotations provided by the RefCOCO dataset include many position words, for example, "The closest girl on the right". This requires the model to understand not only a correspondence between nouns and objects, but also a position relationship between objects represented by an orientation word. In comparison with a latest SOTA method LAVT, val, testA, and testB of CoupAlign increase by 1.97%, 1.94%, and 1.79% respectively on RefCOCO. Language annotations on G-Ref have a more complex syntax structure than RefCOCO, and an average sentence length is longer. For example, a sentence such as "chocolate dessert directly in front of us in the center" requires finer-grained word-pixel alignment, more accurate sentence-mask alignment, and more comprehensive language understanding. As shown in Table 1, on G-Ref, CoupAlign surpasses LAVT by about 1.6% and 0.13% in terms of val and test. Results of each sub-dataset of the two datasets are all better than the existing SOTA, which proves effectiveness of the method.

Word-pixel alignment allows cross-modal interactions to occur in both bottom-layer and upper-layer phases of encoding. In Table 2, it can be found that, after a word-pixel alignment module is removed, the indicator oIoU of the model decreases by about 4.3%. This indicates that existence of the word-pixel alignment module in an encoding phase is very necessary. In addition, when a bidirectional attention mechanism is replaced with a unidirectional attention mechanism, the indicator oIoU of the model decreases by about 2%. This indicates that not only an attention from a language to a vision, but also an attention from a vision to a language is very important. After a sentence-object alignment module is removed, the indicator oIoU of the model decreases by about 1.7%. This indicates effect of a constraint on a mask by the sentence-object alignment module, and helps improve accuracy of CoupAlign prediction. Last two rows in Table 2 show comparison effect after an auxiliary loss function is removed. After the auxiliary loss function is removed, the oIoU indicator of the model decreases by about 1%. This proves that the auxiliary loss function enhances the capability of the model to separate the foreground and the background, which helps CoupAlign better perform multi-layer alignment.

**Table 2 Ablation experiment**

| WPA | SMA | Aux Loss | oIoU | mIoU | prec@0.5 | prec@0.7 | prec@0.9 |
|---|---|---|---|---|---|---|---|
| | ✔ | ✔ | 70.43 | 69.61 | 80.03 | 68.91 | 27.47 |
| ✔ | | ✔ | 73.02 | 73.85 | 84.86 | 74.62 | 29.25 |
| ✔ | ✔ | | 73.70 | 74.21 | 85.32 | 75.31 | 30.14 |
| ✔ | ✔ | ✔ | 74.70 | 75.49 | 86.40 | 77.59 | 32.40 |

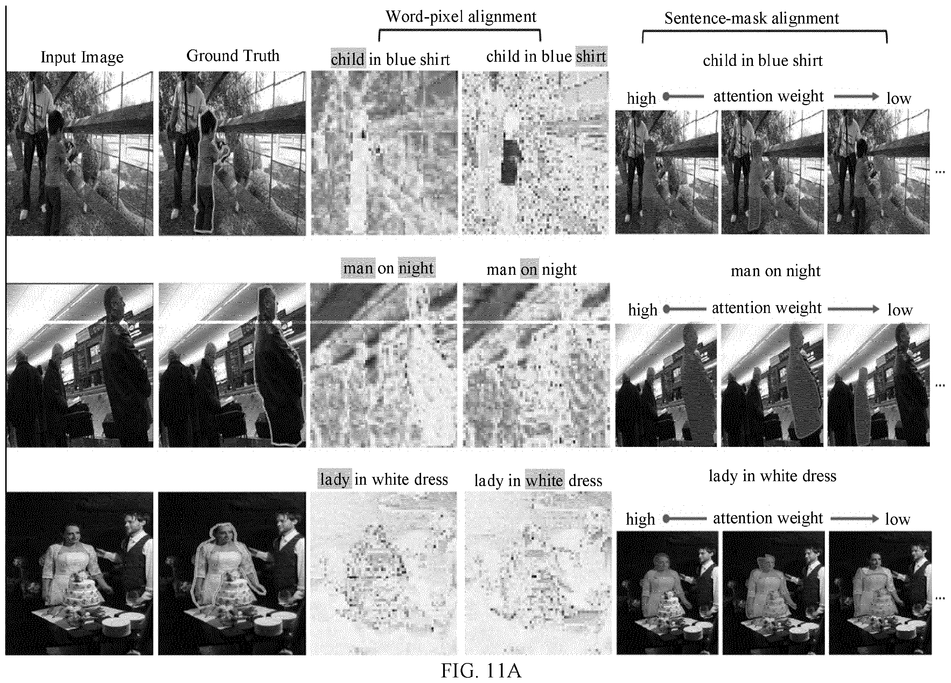

The word-pixel alignment module and the sentence-object alignment module for verification can provide accurate and persistent alignment. An attention map of an intermediate layer of the alignment module is visualized in FIG. 11A. As shown in FIG. 11A, it can be seen that the word-pixel alignment module highlights a pixel region most relevant to word semantics. It should be noted that a vocabulary library of language annotations for reference image segmentation is much larger than that of conventional semantic segmentation. In this case, CoupAlign can not only capture words that distinguish between different parts of speech, but also have a good ability to distinguish between synonymous nouns. For example, CoupAlign can distinguish between synonymous nouns such as "child", "man", and "lady". However, these synonymous nouns are often vaguely defined as a "person" category in a semantic segmentation dataset. For the sentence-object alignment module, a mask prediction is visualized in descending order of semantic similarities with sentences. A mask with a larger similarity indicates a larger coincidence degree with the target object, and a mask with a smaller similarity indicates a smaller coincidence degree with the target object. In FIG. 11A, it can be seen that the sentence-object alignment module allows the model to focus on different objects, so that a position relationship between the objects can be perceived. In addition, because of introduction of a target integrity constraint, segmentation prediction of the model is less likely to produce hollowing, fragmentation, and other phenomena.

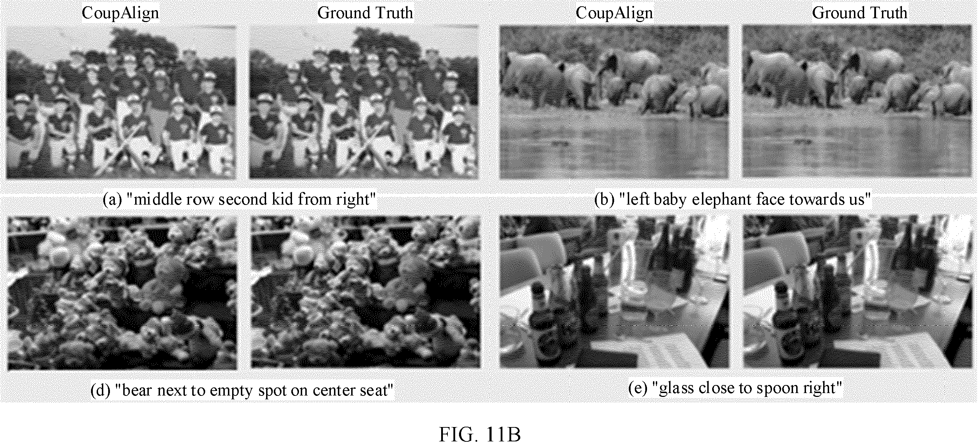

FIG. 11B shows some examples of a final prediction result of a visualization model. CoupAlign has a strong positioning capability in a scenario in which there are congested targets of a same category.

An embodiment of this application provides a data processing method. The method includes: obtaining a first image feature corresponding to an image and a text feature corresponding to a text, where semantics of the text corresponds to a target object, and the text indicates to predict, from the image, a region corresponding to the target object; obtaining a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature; and determining, based on a similarity between the text feature and the plurality of second embedding vectors, a weight corresponding to each second embedding vector, where a plurality of weights are used to be fused with a plurality of second image features, to determine a prediction region corresponding to the target object. This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve processing precision of a model.

In addition, this application further provides a data processing method. The method includes:
obtaining a first image feature corresponding to an image and a text feature corresponding to a text, where semantics of the text corresponds to a target object, and the text indicates to predict, from the image, a region corresponding to the target object; and the first image feature and the text feature are obtained through a feature extraction network;
obtaining a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature;
determining, based on a similarity between the text feature and the plurality of second embedding vectors, a weight corresponding to each second embedding vector, where a plurality of weights are used to be fused with a plurality of second image features, to determine a prediction region corresponding to the target object; and
updating the feature extraction network and the neural network based on a difference between the prediction region and a true region corresponding to the target object in the image.

In a possible implementation, the prediction region is a mask region or a detection box.

In a possible implementation, that semantics of the text corresponds to a target object specifically includes: The semantics of the text is used to describe a feature of the target object.

In a possible implementation, the obtaining a first image feature corresponding to an image and a text feature corresponding to a text includes:
processing the image by using an image encoder, to obtain a third image feature corresponding to the image;
processing the text by using a text encoder, to obtain a first text feature corresponding to the text; and
fusing the third image feature and the first text feature by using a bidirectional attention mechanism, to obtain the first image feature corresponding to the image and the text feature corresponding to the text.

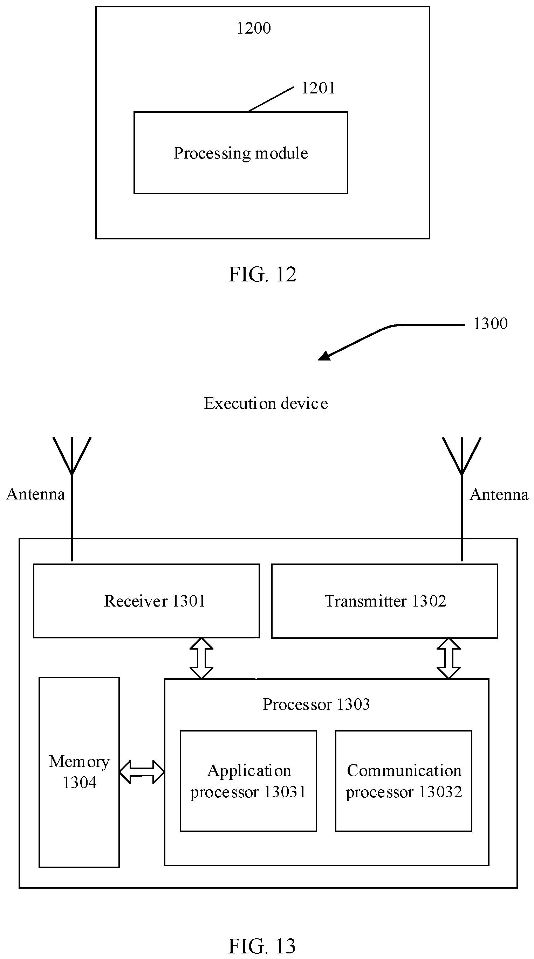

FIG. 12 is a diagram of a structure of a data processing apparatus according to an embodiment of this application. As shown in FIG. 12, the data processing apparatus 1200 provided in this embodiment of this application includes:
a processing module 1201, configured to: obtain a first image feature corresponding to an image and a text feature corresponding to a text, where semantics of the text corresponds to a target object, and the text indicates to predict, from the image, a region corresponding to the target object;
obtain a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature; and
determine, based on a similarity between the text feature and the plurality of second embedding vectors, a weight corresponding to each second embedding vector, where a plurality of weights are used to be fused with a plurality of second image features, to determine a prediction region corresponding to the target object.

For specific descriptions of the processing module 1201, refer to the descriptions of steps 601 to 603 in the foregoing embodiment. Details are not described herein again.

The image may include a plurality of objects including the target object, each second embedding vector corresponds to one object in the image, and one or more embedding vectors in the plurality of second embedding vectors may correspond to the target object. It should be understood that "correspond" herein may be understood as that the second embedding vector is used to describe a feature of the object in the image, and the second embedding vectors obtained through the neural network may distinguish between different objects in the image, so that an object granularity can be used in a subsequent prediction process.

This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve processing precision of a model.

In a possible implementation, the prediction region is a mask region or a detection box.

In a possible implementation, that semantics of the text corresponds to a target object specifically includes: The semantics of the text is used to describe a feature of the target object.

In a possible implementation, the processing module is specifically configured to:
process the image by using an image encoder, to obtain a third image feature corresponding to the image;
process the text by using a text encoder, to obtain a first text feature corresponding to the text; and
fuse the third image feature and the first text feature by using a bidirectional attention mechanism, to obtain the first image feature corresponding to the image and the text feature corresponding to the text.

In a possible implementation, the first image feature is a feature that is obtained through upsampling and whose size is consistent with that of the image.

In a possible implementation, the neural network includes a plurality of transformer layers.

In addition, an embodiment of this application further provides a data processing apparatus, including:
a processing module, configured to: obtain a first image feature corresponding to an image and a text feature corresponding to a text, where semantics of the text corresponds to a target object, and the text indicates to predict, from the image, a region corresponding to the target object; and the first image feature and the text feature are obtained through a feature extraction network;
obtain a plurality of second embedding vectors through a neural network based on a plurality of preset first embedding vectors and the first image feature, where each second embedding vector corresponds to one object in the image, and each second embedding vector and the first image feature are used to be fused to obtain one corresponding second image feature; and
determine, based on a similarity between the text feature and the plurality of second embedding vectors, a weight corresponding to each second embedding vector, where a plurality of weights are used to be fused with a plurality of second image features, to determine a prediction region corresponding to the target object; and
an update module, configured to update the feature extraction network and the neural network based on a difference between the prediction region and a true region corresponding to the target object in the image.

The image may include a plurality of objects including the target object, each second embedding vector corresponds to one object in the image, and one or more embedding vectors in the plurality of second embedding vectors may correspond to the target object. It should be understood that "correspond" herein may be understood as that the second embedding vector is used to describe a feature of the object in the image, and the second embedding vectors obtained through the neural network may distinguish between different objects in the image, so that an object granularity can be used in a subsequent prediction process.

This is equivalent to changing an image feature from being at a pixel granularity to being at a target object granularity. In other words, a target integrity constraint is introduced in cross-modal feature fusion, pixels belonging to a same target are used as a whole to be fused with language encoding, and an instance region is activated on a per-target basis. This can effectively resolve a problem of inaccurate target positioning and mask prediction or detection box prediction in an existing language-driven precise instance segmentation method, and can further improve processing precision of a model.

In a possible implementation, the prediction region is a mask region or a detection box.

In a possible implementation, that semantics of the text corresponds to a target object specifically includes: The semantics of the text is used to describe a feature of the target object.

In a possible implementation, the processing module is specifically configured to:
process the image by using an image encoder, to obtain a third image feature corresponding to the image;
process the text by using a text encoder, to obtain a first text feature corresponding to the text; and
fuse the third image feature and the first text feature by using a bidirectional attention mechanism, to obtain the first image feature corresponding to the image and the text feature corresponding to the text.

The following describes an execution device provided in embodiments of this application. FIG. 13 is a diagram of a structure of an execution device according to an embodiment of this application. The execution device 1300 may be specifically represented as a virtual reality VR device, a mobile phone, a tablet, a notebook computer, an intelligent wearable device, a monitoring data processing device, a server, or the like. This is not limited herein. Specifically, the execution device 1300 includes a receiver 1301, a transmitter 1302, a processor 1303, and a memory 1304 (there may be one or more processors 1303 in the execution device 1300, and one processor is used as an example in FIG. 13.) The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data to the processor 1303. A part of the memory 1304 may further include a non-volatile random access memory (non-volatile random access memory, NVRAM). The memory 1304 stores operation instructions, an executable module, or a data structure of the processor, a subset thereof, or an extended set thereof. The operation instructions may include various operation instructions used to implement various operations.

The processor 1303 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 1303, or may be implemented by the processor 1303. The processor 1303 may be an integrated circuit chip and has a signal processing capability. In an implementation process, the steps in the foregoing methods can be implemented by using a hardware integrated logic circuit in the processor 1303, or by using instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1303 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1304. The processor 1303 reads information in the memory 1304, and completes the steps related to a model inference process in the foregoing methods in combination with hardware of the processor 1303.

The receiver 1301 may be configured to: receive input digit or character information, and generate a signal input related to a related setting and function control of the execution device. The transmitter 1302 may be configured to output digital or character information through a first interface. The transmitter 1302 may be further configured to send an instruction to a disk group through the first interface, to modify data in the disk group. The transmitter 1302 may further include a display device, for example, a display.

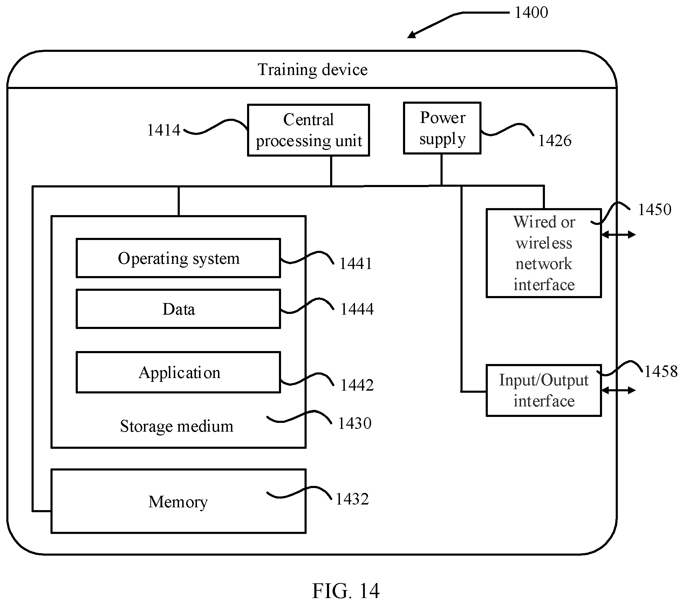

An embodiment of this application further provides a training device. FIG. 14 is a diagram of a structure of a training device according to an embodiment of this application. Specifically, the training device 1400 is implemented by one or more servers. The training device 1400 may vary greatly due to different configurations or performance, and may include one or more central processing units (central processing units, CPUs) 1414 (for example, one or more processors), a memory 1432, and one or more storage media 1430 (for example, one or more mass storage devices) that store an application 1442 or data 1444. The memory 1432 and the storage medium 1430 may be transient storage or persistent storage. A program stored in the storage medium 1430 may include one or more modules (not shown in the figure), and each module may include a series of instruction operations on the training device. Further, the central processing unit 1414 may be configured to: communicate with the storage medium 1430, and perform a series of instruction operations of the storage medium 1430 on the training device 1400.

The training device 1400 may further include one or more power supplies 1426, one or more wired or wireless network interfaces 1450, one or more input/output interfaces 1458, or one or more operating systems 1441, for example, Windows Server^{™}, Mac OS X^{™}, Unix^{™}, Linux^{™}, and FreeBSD^{™}.

In this embodiment of this application, the central processing unit 1414 is configured to perform an action related to model training in the foregoing embodiments.

An embodiment of this application further provides a computer program product. When the computer program product runs on a computer, the computer is enabled to perform steps performed by the execution device, or the computer is enabled to perform steps performed by the training device.

An embodiment of this application further provides a computer-readable storage medium. The computer-readable storage medium stores a program used to process a signal. When the program is run on a computer, the computer is enabled to perform steps performed by the execution device, or the computer is enabled to perform steps performed by the training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in the foregoing embodiments, or a chip in a training device performs the data processing method described in the foregoing embodiments. Optionally, the storage unit is a storage unit in the chip, for example, a register or a buffer. Alternatively, the storage unit may be a storage unit in the execution device, the training device, or the terminal device but outside the chip, for example, a read-only memory (read-only memory, ROM), another type of static storage device that can store static information and instructions, or a random access memory (random access memory, RAM).

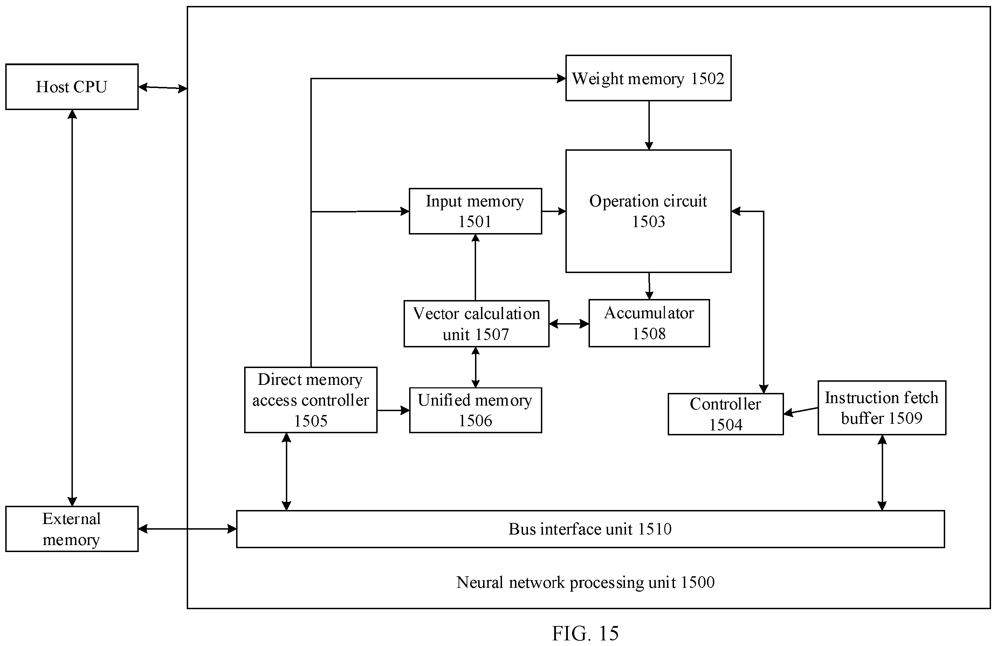

Specifically, FIG. 15 is a diagram of a structure of a chip according to an embodiment of this application. The chip may be represented as a neural network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of process engines (Process Engines, PEs). In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit fetches data of the matrix A from an input memory 1501 to perform a matrix operation with the matrix B, and stores an obtained partial result or an obtained final result of the matrix into an accumulator (accumulator) 1508.

A unified memory 1506 is configured to store input data and output data. Weight data is directly transferred to the weight memory 1502 through a direct memory access controller (Direct Memory Access Controller, DMAC) 1505. The input data is also transferred to the unified memory 1506 through the DMAC.

BIU is an abbreviation of a Bus Interface Unit. A bus interface unit 1510 is configured to perform interaction between an AXI bus and the DMAC and interaction between the AXI bus and an instruction fetch buffer (Instruction Fetch Buffer, IFB) 1509.

The bus interface unit (Bus Interface Unit, BIU for short) 1510 is configured to obtain instructions from an external memory by the instruction fetch buffer 1509, and is further configured to obtain original data of the input matrix A or the weight matrix B from the external memory by the direct memory access controller 1505.

The DMAC is mainly configured to transfer input data in an external memory DDR to the unified memory 1506, transfer weight data to the weight memory 1502, or transfer input data to the input memory 1501.

A vector calculation unit 1507 includes a plurality of operation processing units. When necessary, further processing is performed on an output of the operation circuit 1503, such as vector multiplication, vector addition, an exponential operation, a logarithmic operation, and value comparison. The vector calculation unit 1507 is mainly used for non-convolutional/fully-connected layer network calculation in a neural network, such as batch normalization (batch normalization), pixel-level summation, and upsampling of a feature plane.

In some implementations, the vector calculation unit 1507 can store a processed output vector into the unified memory 1506. For example, the vector calculation unit 1507 may apply a linear function or a non-linear function to the output of the operation circuit 1503, for example, perform linear interpolation on a feature plane extracted by a convolutional layer; and for another example, add value vectors, to generate an activation value. In some implementations, the vector calculation unit 1507 generates a normalized value, a pixel-level sum, or both. In some implementations, the processed output vector can be used as an activation input of the operation circuit 1503, for example, used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary general-purpose hardware, or by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by using software, hardware, firmware, or any combination thereof. When software is used for implementation, all or some of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or may be a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

## Claims

1. A data processing method, comprising:
obtaining a first image feature corresponding to an image and a text feature corresponding to a text, wherein semantics of the text corresponds to a target object, and the text indicates to predict, from the image, a region corresponding to the target object;
obtaining a plurality of second embedding vectors through a neural network based on a plurality of preset first embedding vectors and the first image feature, wherein each second embedding vector corresponds to one object in the image, and each second embedding vector and the first image feature are used to be fused to obtain one corresponding second image feature; the method further **characterised in**:
determining, based on a similarity between the text feature and the plurality of second embedding vectors, a weight corresponding to each second embedding vector, wherein a plurality of weights are used to be fused with a plurality of second image features, to determine a prediction region corresponding to the target object.

2. The method according to claim 1, wherein the prediction region is a mask region or a detection box.

3. The method according to claim 1 or 2, wherein the semantics of the text corresponds to the target object specifically comprises: the semantics of the text is used to describe a feature of the target object.

4. The method according to any one of claims 1 to 3, wherein the obtaining the first image feature corresponding to the image and the text feature corresponding to the text comprises:
processing the image by using an image encoder, to obtain a third image feature corresponding to the image;
processing the text by using a text encoder, to obtain a first text feature corresponding to the text; and
fusing the third image feature and the first text feature by using a bidirectional attention mechanism, to obtain the first image feature corresponding to the image and the text feature corresponding to the text.

5. The method according to any one of claims 1 to 4, wherein the first image feature is a feature that is obtained through upsampling and whose size is consistent with that of the image.

6. The method according to any one of claims 1 to 5, wherein the neural networkcomprises a plurality of transformer layers.

7. A data processing method, comprising:
obtaining a first image feature corresponding to an image and a text feature corresponding to a text, wherein semantics of the text corresponds to a target object, and the text indicates to predict, from the image, a region corresponding to the target object; and the first image feature and the text feature are obtained through a feature extraction network;
obtaining a plurality of second embedding vectors through a neural network based on a plurality of preset first embedding vectors and the first image feature, wherein each second embedding vector corresponds to one object in the image, and each second embedding vector and the first image feature are used to be fused to obtain one corresponding second image feature;
determining, based on a similarity between the text feature and the plurality of second embedding vectors, a weight corresponding to each second embedding vector, wherein a plurality of weights are used to be fused with a plurality of second image features, to determine a prediction region corresponding to the target object; and
updating the feature extraction network and the neural network based on a difference between the prediction region and a true region corresponding to the target object in the image.

8. The method according to claim 7, wherein the prediction region is a mask region or a detection box.

9. The method according to claim 7 or 8, wherein the semantics of the text corresponds to the target object specifically comprises: the semantics of the text is used to describe a feature of the target object.

10. The method according to any one of claims 7 to 9, wherein the obtaining the first image feature corresponding to the image and the text feature corresponding to the text comprises:
processing the image by using an image encoder, to obtain a third image feature corresponding to the image;
processing the text by using a text encoder, to obtain a first text feature corresponding to the text; and
fusing the third image feature and the first text feature by using a bidirectional attention mechanism, to obtain the first image feature corresponding to the image and the text feature corresponding to the text.

11. A data processing apparatus, comprising:
a processing module, configured to: obtain a first image feature corresponding to an image and a text feature corresponding to a text, wherein semantics of the text corresponds to a target object, and the text indicates to predict, from the image, a region corresponding to the target object;
obtain a plurality of second embedding vectors through a neural network based on a plurality of preset first embedding vectors and the first image feature, wherein each second embedding vector corresponds to one object in the image, and each second embedding vector and the first image feature are used to be fused to obtain one corresponding second image feature; the apparatus **characterised in** the processing module being further configured to:
determine, based on a similarity between the text feature and the plurality of second embedding vectors, a weight corresponding to each second embedding vector, wherein a plurality of weights are used to be fused with a plurality of second image features, to determine a prediction region corresponding to the target object.

12. The apparatus according to claim 11, wherein the prediction region is a mask region or a detection box.

13. The apparatus according to claim 11 or 12, wherein the semantics of the text corresponds to the target object specifically comprises: the semantics of the text is used to describe a feature of the target object.

14. A data processing apparatus, comprising:
a processing module, configured to: obtain a first image feature corresponding to an image and a text feature corresponding to a text, wherein semantics of the text corresponds to a target object, and the text indicates to predict, from the image, a region corresponding to the target object; and the first image feature and the text feature are obtained through a feature extraction network;
obtain a plurality of second embedding vectors through a neural network based on a plurality of preset first embedding vectors and the first image feature, wherein each second embedding vector corresponds to one object in the image, and each second embedding vector and the first image feature are used to be fused to obtain one corresponding second image feature; and
determine, based on a similarity between the text feature and the plurality of second embedding vectors, a weight corresponding to each second embedding vector, wherein a plurality of weights are used to be fused with a plurality of second image features, to determine a prediction region corresponding to the target object; and
an update module, configured to update the feature extraction network and the neural network based on a difference between the prediction region and a true region corresponding to the target object in the image.

15. A data processing system, comprising at least one processor and at least one memory, wherein the processor and the memory are connected and communicate with each other through a communication bus;
the at least one memory is configured to store code; and
the at least one processor is configured to execute the code to perform the method according to any one of claims 1 to 10.

## Patentansprüche

1. Datenverarbeitungsverfahren, umfassend:
Erlangen eines ersten Bildmerkmals entsprechend einem Bild und eines Textmerkmals entsprechend einem Text, wobei die Semantik des Textes einem Zielobjekt entspricht und der Text angibt, einen Bereich entsprechend dem Zielobjekt aus dem Bild vorherzusagen;
Erlangen einer Vielzahl von zweiten Einbettungsvektoren über ein neuronales Netzwerk basierend auf einer Vielzahl von ersten voreingestellten Einbettungsvektoren und dem ersten Bildmerkmal, wobei jeder zweite Einbettungsvektor einem Objekt in dem Bild entspricht und jeder zweite Einbettungsvektor und das erste Bildmerkmal zur Fusion verwendet werden, um ein entsprechendes zweites Bildmerkmal zu erlangen; das Verfahren ferner durch Folgendes gekennzeichnet ist:
Bestimmen einer Gewichtung entsprechend jedem zweiten Einbettungsvektor basierend auf einer Ähnlichkeit zwischen dem Textmerkmal und der Vielzahl von zweiten Einbettungsvektoren,
wobei eine Vielzahl von Gewichtungen zur Fusion mit einer Vielzahl von zweiten Bildmerkmalen verwendet wird, um einen Vorhersagebereich entsprechend dem Zielobjekt zu bestimmen.

2. Verfahren nach Anspruch 1, wobei der Vorhersagebereich ein Maskenbereich oder ein Erkennungsfeld ist.

3. Verfahren nach Anspruch 1 oder 2, wobei die Semantik des Textes dem Zielobjekt entspricht speziell Folgendes umfasst: die Semantik des Textes wird verwendet, um ein Merkmal des Zielobjekts zu beschreiben.

4. Verfahren nach einem der Ansprüche 1 bis 3, wobei das Erlangen des ersten Bildmerkmals entsprechend dem Bild und des Textmerkmals entsprechend dem Text Folgendes umfasst:
Verarbeiten des Bildes unter Verwendung eines Bildcodierers, um ein drittes Bildmerkmal entsprechend dem Bild zu erlangen;
Verarbeiten des Textes unter Verwendung eines Textcodierers, um ein erstes Textmerkmal entsprechend dem Text zu erlangen; und
Fusionieren des dritten Bildmerkmals und des ersten Textmerkmals unter Verwendung eines bidirektionalen Aufmerksamkeitsmechanismus, um das erste Bildmerkmal entsprechend dem Bild und das Textmerkmal entsprechend dem Text zu erlangen.

5. Verfahren nach einem der Ansprüche 1 bis 4, wobei das erste Bildmerkmal ein Merkmal ist, das über Abtastratenerhöhung erlangt wird und dessen Größe mit jener des Bildes konsistent ist.

6. Verfahren nach einem der Ansprüche 1 bis 5, wobei das neuronale Netzwerk eine Vielzahl von Transformatorschichten umfasst.

7. Datenverarbeitungsverfahren, umfassend:
Erlangen eines ersten Bildmerkmals entsprechend einem Bild und eines Textmerkmals entsprechend einem Text, wobei die Semantik des Textes einem Zielobjekt entspricht und der Text angibt, einen Bereich entsprechend dem Zielobjekt aus dem Bild vorherzusagen; und das erste Bildmerkmal und das Textmerkmal über ein Merkmalsextraktionsnetzwerk erlangt werden;
Erlangen einer Vielzahl von zweiten Einbettungsvektoren über ein neuronales Netzwerk basierend auf einer Vielzahl von ersten voreingestellten Einbettungsvektoren und dem ersten Bildmerkmal, wobei jeder zweite Einbettungsvektor einem Objekt in dem Bild entspricht und jeder zweite Einbettungsvektor und das erste Bildmerkmal zur Fusion verwendet werden, um ein entsprechendes zweites Bildmerkmal zu erlangen;
Bestimmen einer Gewichtung entsprechend jedem zweiten Einbettungsvektor basierend auf einer Ähnlichkeit zwischen dem Textmerkmal und der Vielzahl von zweiten Einbettungsvektoren, wobei eine Vielzahl von Gewichtungen zur Fusion mit einer Vielzahl von zweiten Bildmerkmalen verwendet wird, um einen Vorhersagebereich entsprechend dem Zielobjekt zu bestimmen; und
Aktualisieren des Merkmalsextraktionsnetzwerks und des neuronalen Netzwerks basierend auf einer Differenz zwischen dem Vorhersagebereich und einem tatsächlichen Bereich entsprechend dem Zielobjekt in dem Bild.

8. Verfahren nach Anspruch 7, wobei der Vorhersagebereich ein Maskenbereich oder ein Erkennungsfeld ist.

9. Verfahren nach Anspruch 7 oder 8, wobei die Semantik des Textes dem Zielobjekt entspricht speziell Folgendes umfasst: die Semantik des Textes wird verwendet, um ein Merkmal des Zielobjekts zu beschreiben.

10. Verfahren nach einem der Ansprüche 7 bis 9, wobei das Erlangen des ersten Bildmerkmals entsprechend dem Bild und des Textmerkmals entsprechend dem Text Folgendes umfasst:
Verarbeiten des Bildes unter Verwendung eines Bildcodierers, um ein drittes Bildmerkmal entsprechend dem Bild zu erlangen;
Verarbeiten des Textes unter Verwendung eines Textcodierers, um ein erstes Textmerkmal entsprechend dem Text zu erlangen; und
Fusionieren des dritten Bildmerkmals und des ersten Textmerkmals unter Verwendung eines bidirektionalen Aufmerksamkeitsmechanismus, um das erste Bildmerkmal entsprechend dem Bild und das Textmerkmal entsprechend dem Text zu erlangen.

11. Datenverarbeitungsvorrichtung, umfassend:
ein Verarbeitungsmodul, das dazu konfiguriert ist: ein erstes Bildmerkmal entsprechend einem Bild und ein Textmerkmal entsprechend einem Text zu erlangen, wobei die Semantik des Textes einem Zielobjekt entspricht und der Text angibt, einen Bereich entsprechend dem Zielobjekt aus dem Bild vorherzusagen;
eine Vielzahl von zweiten Einbettungsvektoren über ein neuronales Netzwerk basierend auf einer Vielzahl von ersten voreingestellten Einbettungsvektoren und dem ersten Bildmerkmal zu erlangen, wobei jeder zweite Einbettungsvektor einem Objekt in dem Bild entspricht und jeder zweite Einbettungsvektor und
das erste Bildmerkmal zur Fusion verwendet werden, um ein entsprechendes zweites Bildmerkmal zu erlangen; wobei die in dem Verarbeitungsmodul gekennzeichnete Vorrichtung ferner dazu konfiguriert ist:
eine Gewichtung entsprechend jedem zweiten Einbettungsvektor basierend auf einer Ähnlichkeit zwischen dem Textmerkmal und der Vielzahl von zweiten Einbettungsvektoren zu bestimmen, wobei eine Vielzahl von Gewichtungen zur Fusion mit einer Vielzahl von zweiten Bildmerkmalen verwendet wird, um einen Vorhersagebereich entsprechend dem Zielobjekt zu bestimmen.

12. Vorrichtung nach Anspruch 11, wobei der Vorhersagebereich ein Maskenbereich oder ein Erkennungsfeld ist.

13. Vorrichtung nach Anspruch 11 oder 12, wobei die Semantik des Textes dem Zielobjekt entspricht speziell Folgendes umfasst: die Semantik des Textes wird verwendet, um ein Merkmal des Zielobjekts zu beschreiben.

14. Datenverarbeitungsvorrichtung, umfassend:
ein Verarbeitungsmodul, das dazu konfiguriert ist: ein erstes Bildmerkmal entsprechend einem Bild und ein Textmerkmal entsprechend einem Text zu erlangen, wobei die Semantik des Textes einem Zielobjekt entspricht und der Text angibt, einen Bereich entsprechend dem Zielobjekt aus dem Bild vorherzusagen;
und das erste Bildmerkmal und das Textmerkmal über ein Merkmalsextraktionsnetzwerk erlangt werden;
eine Vielzahl von zweiten Einbettungsvektoren über ein neuronales Netzwerk basierend auf einer Vielzahl von ersten voreingestellten Einbettungsvektoren und dem ersten Bildmerkmal zu erlangen, wobei jeder zweite Einbettungsvektor einem Objekt in dem Bild entspricht und jeder zweite Einbettungsvektor und das erste Bildmerkmal zur Fusion verwendet werden, um ein entsprechendes zweites Bildmerkmal zu erlangen; und
eine Gewichtung entsprechend jedem zweiten Einbettungsvektor basierend auf einer Ähnlichkeit zwischen dem Textmerkmal und der Vielzahl von zweiten Einbettungsvektoren zu bestimmen, wobei eine Vielzahl von Gewichtungen zur Fusion mit einer Vielzahl von zweiten Bildmerkmalen verwendet wird, um einen Vorhersagebereich entsprechend dem Zielobjekt zu bestimmen; und
ein Aktualisierungsmodul, das dazu konfiguriert ist, das Merkmalsextraktionsnetzwerk und das neuronale Netzwerk basierend auf einer Differenz zwischen dem Vorhersagebereich und einem tatsächlichen Bereich entsprechend dem Zielobjekt in dem Bild zu aktualisieren.

15. Datenverarbeitungssystem, umfassend mindestens einen Prozessor und mindestens einen Speicher, wobei der Prozessor und der Speicher über einen Kommunikationsbus verbunden sind und miteinander kommunizieren;
der mindestens eine Speicher dazu konfiguriert ist, einen Code zu speichern; und
der mindestens eine Prozessor dazu konfiguriert ist, den Code auszuführen, um das Verfahren nach einem der Ansprüche 1 bis 10 durchzuführen.

## Revendications

1. Procédé de traitement de données, comprenant :
l'obtention d'une première caractéristique d'image correspondant à une image et une caractéristique de texte correspondant à un texte, dans lequel la sémantique du texte correspond à un objet cible, et le texte indique de prédire, à partir de l'image, une région correspondant à l'objet cible ;
l'obtention d'une pluralité de seconds vecteurs d'intégration par un réseau neuronal, sur la base d'une pluralité de premiers vecteurs d'intégration prédéfinis et de la première caractéristique d'image, dans lequel chaque second vecteur d'intégration correspond à un objet dans l'image, et chaque second vecteur d'intégration et la première caractéristique d'image sont utilisés pour être fusionnés pour obtenir une deuxième caractéristique d'image correspondante ; le procédé étant également **caractérisé par** :
la détermination, sur la base d'une similarité entre la caractéristique de texte et la pluralité de seconds vecteurs d'intégration, d'un poids correspondant à chaque second vecteur d'intégration, dans lequel une pluralité de poids sont utilisés pour être fusionnés avec une pluralité de deuxièmes caractéristiques d'image, pour déterminer une région de prédiction correspondant à l'objet cible.

2. Procédé selon la revendication 1, dans lequel la région de prédiction est une région de masque ou une boîte de détection.

3. Procédé selon la revendication 1 ou 2, dans lequel la sémantique du texte correspond à l'objet cible, comprend spécifiquement : la sémantique du texte est utilisée pour décrire une caractéristique de l'objet cible.

4. Procédé selon l'une quelconque des revendications 1 à 3, dans lequel l'obtention de la première caractéristique d'image correspondant à l'image et de la caractéristique de texte correspondant au texte comprend :
le traitement de l'image à l'aide d'un encodeur d'image, pour obtenir une troisième caractéristique d'image correspondant à l'image ;
le traitement du texte à l'aide d'un encodeur de texte, pour obtenir une première caractéristique de texte correspondant au texte ; et
la fusion de la troisième caractéristique d'image et la première caractéristique de texte à l'aide d'un mécanisme d'attention bidirectionnel, pour obtenir la première caractéristique d'image correspondant à l'image et la caractéristique de texte correspondant au texte.

5. Procédé selon l'une quelconque des revendications 1 à 4, dans lequel la première caractéristique d'image est une caractéristique qui est obtenue par suréchantillonnage et dont la taille est cohérente avec celle de l'image.

6. Procédé selon l'une quelconque des revendications 1 à 5, dans lequel le réseau neuronal comprend une pluralité de couches de transformateur.

7. Procédé de traitement de données, comprenant :
l'obtention d'une première caractéristique d'image correspondant à une image et une caractéristique de texte correspondant à un texte, dans lequel la sémantique du texte correspond à un objet cible, et le texte indique de prédire, à partir de l'image, une région correspondant à l'objet cible ;
et la première caractéristique d'image et la caractéristique de texte sont obtenues par le biais d'un réseau d'extraction de caractéristiques ;
l'obtention d'une pluralité de seconds vecteurs d'intégration par un réseau neuronal, sur la base d'une pluralité de premiers vecteurs d'intégration prédéfinis et de la première caractéristique d'image, dans lequel chaque second vecteur d'intégration correspond à un objet dans l'image, et chaque second vecteur d'intégration et la première caractéristique d'image sont utilisés pour être fusionnés pour obtenir une deuxième caractéristique d'image correspondante ;
la détermination, sur la base d'une similarité entre la caractéristique de texte et la pluralité de seconds vecteurs d'intégration, d'un poids correspondant à chaque second vecteur d'intégration, dans lequel une pluralité de poids sont utilisés pour être fusionnés avec une pluralité de deuxièmes caractéristiques d'image, pour déterminer une région de prédiction correspondant à l'objet cible ; et
la mise à jour du réseau d'extraction de caractéristiques et du réseau neuronal sur la base d'une différence entre la région de prédiction et une vraie région correspondant à l'objet cible dans l'image.

8. Procédé selon la revendication 7, dans lequel la région de prédiction est une région de masque ou une boîte de détection.

9. Procédé selon la revendication 7 ou 8, dans lequel la sémantique du texte correspond à l'objet cible, comprend spécifiquement : la sémantique du texte est utilisée pour décrire une caractéristique de l'objet cible.

10. Procédé selon l'une quelconque des revendications 7 à 9, dans lequel l'obtention de la première caractéristique d'image correspondant à l'image et de la caractéristique de texte correspondant au texte comprend :
le traitement de l'image à l'aide d'un encodeur d'image, pour obtenir une troisième caractéristique d'image correspondant à l'image ;
le traitement du texte à l'aide d'un encodeur de texte, pour obtenir une première caractéristique de texte correspondant au texte ; et
la fusion de la troisième caractéristique d'image et la première caractéristique de texte à l'aide d'un mécanisme d'attention bidirectionnel, pour obtenir la première caractéristique d'image correspondant à l'image et la caractéristique de texte correspondant au texte.

11. Appareil de traitement de données, comprenant :
un module de traitement, configuré pour : obtenir une première caractéristique d'image correspondant à une image et une caractéristique de texte correspondant à un texte, dans lequel la sémantique du texte correspond à un objet cible, et le texte indique de prédire, à partir de l'image, une région correspondant à l'objet cible ;
obtenir une pluralité de seconds vecteurs d'intégration par un réseau neuronal, sur la base d'une pluralité de premiers vecteurs d'intégration prédéfinis et de la première caractéristique d'image, dans lequel chaque second vecteur d'intégration correspond à un objet dans l'image, et chaque second vecteur d'intégration et la première caractéristique d'image sont utilisés pour être fusionnés pour obtenir une deuxième caractéristique d'image correspondante ; l'appareil étant **caractérisé en ce que** le module de traitement est également configuré pour :
déterminer, sur la base d'une similarité entre la caractéristique de texte et la pluralité de seconds vecteurs d'intégration, un poids correspondant à chaque second vecteur d'intégration, dans lequel une pluralité de poids sont utilisés pour être fusionnés avec une pluralité de deuxièmes caractéristiques d'image, pour déterminer une région de prédiction correspondant à l'objet cible.

12. Appareil selon la revendication 11, dans lequel la région de prédiction est une région de masque ou une boîte de détection.

13. Appareil selon la revendication 11 ou 12, dans lequel la sémantique du texte correspond à l'objet cible, comprend spécifiquement : la sémantique du texte est utilisée pour décrire une caractéristique de l'objet cible.

14. Appareil de traitement de données, comprenant :
un module de traitement, configuré pour : obtenir une première caractéristique d'image correspondant à une image et une caractéristique de texte correspondant à un texte, dans lequel la sémantique du texte correspond à un objet cible, et le texte indique de prédire, à partir de l'image, une région correspondant à l'objet cible ; et la première caractéristique d'image et la caractéristique de texte sont obtenues par le biais d'un réseau d'extraction de caractéristiques ;
obtenir une pluralité de seconds vecteurs d'intégration par un réseau neuronal, sur la base d'une pluralité de premiers vecteurs d'intégration prédéfinis et de la première caractéristique d'image, dans lequel chaque second vecteur d'intégration correspond à un objet dans l'image, et chaque second vecteur d'intégration et la première caractéristique d'image sont utilisés pour être fusionnés pour obtenir une deuxième caractéristique d'image correspondante ; et
déterminer, sur la base d'une similarité entre la caractéristique de texte et la pluralité de seconds vecteurs d'intégration, un poids correspondant à chaque second vecteur d'intégration, dans lequel une pluralité de poids sont utilisés pour être fusionnés avec une pluralité de deuxièmes caractéristiques d'image, pour déterminer une région de prédiction correspondant à l'objet cible ; et
un module de mise à jour, configuré pour mettre à jour le réseau d'extraction de caractéristiques et le réseau neuronal sur la base d'une différence entre la région de prédiction et une vraie région correspondant à l'objet cible dans l'image.

15. Système de traitement de données, comprenant au moins un processeur et au moins une mémoire, dans lequel le processeur et la mémoire sont connectés et communiquent entre eux par le biais d'un bus de communication ;
l'au moins une mémoire est configurée pour stocker un code ; et l'au moins un processeur est configuré pour exécuter le code, pour réaliser le procédé selon l'une quelconque des revendications 1 à 10.
